# EUROPEAN PATENT APPLICATION

(11) **EP 3 846 111 A1**
(43) Date of publication of application: **07.07.2021**
(21) Application number: 20216858.9
(22) Date of filing: 23.12.2020
(51) Int. Cl.: G06Q 30/06, G06Q 30/00, G06Q 50/00, G06Q 10/10

(54) **CROSS-APPLICATION DATA SHARING**

(30) Priority: 02.01.2020 US 202016733077
(71) Applicant: WhatsApp, Inc., Menlo Park, CA 94025 (US)
(72) Inventor: VARMA, Ajit, Menlo Park, CA California 94025 (US); TIAN, Cheng, Menlo Park, CA California 94025 (US)
(74) Representative: Murgitroyd & Company

(57) **Abstract**

Techniques are described that provide contextual data associated with a merchant application via a messaging application to provide a customer context while conducting a messaging conversation with a merchant. The customer may indicate an intent to initiate the messaging conversation with the merchant via a merchant application or the messaging application. A computing device associated with the merchant application may determine contextual data associated with the merchant application, the contextual data including real-time and/or near real time status of the merchant application. A communication platform associated with the messaging application may cause the contextual data to be presented to the customer via the messaging application, to keep the customer informed of the status of the merchant application while the customer conducts the messaging conversation with the merchant.

## Description

### BACKGROUND

Customers often communicate with merchants about one or more topics. For example, customers may have questions about a service provided, may need to modify a reservation, or the like. Typically, merchants provide customer service as a means by which customers may address the topics. In some cases, a customer may communicate with a customer service representative via a real-time messaging system to address an issue. However, maintaining a messaging system may be overly burdensome to many merchants. As such, merchants may utilize an existing messaging service to provide customer service to customers.

Oftentimes, a customer may identify the issue to discuss with a merchant customer service representative while operating a merchant application. To utilize the existing messaging service, the customer may be required to transition from the merchant application to a messaging application. However, the transition to the messaging application may cause the customer to lose context with regard to updates associated with the merchant application, both related and unrelated to the issue.

### SUMMARY OF THE INVENTION

According to a first aspect of the present invention there is provided a method comprising: receiving, from a first device associated with a user via a first application, an indication of selection of a selectable control associated with a messaging function; causing a second application to be presented on a display associated with the first device, the second application being associated with the messaging function; receiving, from a second device associated with the first application, data corresponding to the first application; and causing the data corresponding to the first application to be presented on the display associated with the first device via the second application.

In some embodiments the method may further comprise receiving, from the second device, a presentation instruction associated with a presentation of the data, wherein the data is presented on the display based at least in part on the presentation instruction.

In some embodiments the second application may be launched via a link associated with the selectable control and the data is received via the link.

In some embodiments the method may further comprise receiving, from the first device, a first message in a conversation thread between the user and a representative associated with the first application, wherein the data is based at least in part on the first message.

In some embodiments the data may be based at least in part on at least one of: a context associated with a first message sent via the second application on the first device; an event associated with the first application, wherein the event occurs at a first time; or an input received via a first instance of the first application on the first device at a second time, wherein the indication of selection of the selectable control is received at a third time after at least one of the first time or the second time.

In some embodiments the method may further comprise determining a conversation thread identifier associated with a conversation thread between the user and a service provider associated with the first application, wherein messages associated with the conversation thread are transmitted between a first instance of the second application on the first device and a second instance of the second application on a third device associated with the first application; sending the conversation thread identifier to the second device associated with the first application; and associating the data with the conversation thread based at least in part on the conversation thread identifier.

In some embodiments the method may further comprise processing messages associated with a conversation thread between the user and a service provider associated with the first application, wherein the messages are transmitted between a first instance of the second application on the first device and a second instance of the second application on a third device associated with the first application, wherein the messages are presented sequentially from a top toward a bottom of a user interface of the first instance of the second application, and the data is presented in a position proximate the top of the user interface before the messages associated with the conversation thread.

In some embodiments the data may be first data received at a first time, the method may further comprise receiving, from the second device at a second time, second data corresponding to the first application; and causing the second data to be presented on the display associated with the first device via the second application, wherein the second data is determined based at least in part on at least one of: a modification to a state associated with the first application; an event associated with the first application; or a context associated with a message sent via a first instance of the second application on the first device.

According to a second aspect of the present invention there is provided a computing system comprising: one or more processors; and computer readable media storing instructions that, when executed by the one or more processors, cause the computing system to: receive, from a first device associated with a user via a first application, an indication of selection of a selectable control associated with a messaging function; cause a second application to be presented on a display associated with the first device, the second application being associated with the messaging function; receive, from a second device associated with the first application, data corresponding to the first application; and cause the data corresponding to the first application to be presented on the display associated with the first device via the second application.

In some embodiments the instructions may further cause the computing system to: receive, from the second device, a presentation instruction associated with a presentation of the data, wherein the data is presented on the display based at least in part on the presentation instruction.

In some embodiments the second application may be launched via a link associated with the selectable control and the data is received via the link.

In some embodiments the data may be determined based at least in part on at least one of: a context associated with a first message sent via the second application on the first device; an event associated with the first application at a first time; or an input received via a first instance of the first application on the first device at a second time, wherein the indication of selection is received at a third time after the first time and the second time.

In some embodiments the instructions may further cause the computing system to: determine a conversation thread identifier associated with a conversation thread between the user and a service provider associated with the first application, wherein messages associated with the conversation thread are transmitted between a first instance of the second application on the first device and a second instance of the second application on a third device associated with the first application; send the conversation thread identifier to the second device associated with the first application; and associate the data with the conversation thread based at least in part on the conversation thread identifier.

In some embodiments the instructions may further cause the computing system to: receive, from the second device at a second time, second data corresponding to the first application; and cause the second data to be presented on the display associated with the first device via the second application, wherein the second data is determined based at least in part on at least one of: a modification to a state associated with the first application; an event associated with the first application; or a context associated with a message sent via a first instance of the second application on the first device.

According to a third aspect of the present invention there is provided one or more computer readable media storing instructions that, when executed by one or more processors of a computing device, cause the computing device to: receive, from a first device associated with a user via a first application, an indication to execute an action associated with a second application; process messages associated with a conversation thread between the user and a service provider associated with the second application, wherein the messages are transmitted between a first instance of the first application on the first device and a second instance of the first application on a second device associated with the second application and wherein the messages are based at least in part on the action; receive, from a third device associated with the second application, data corresponding to the second application; and cause the data corresponding to the second application to be presented on a display associated with the first device via the first instance of the first application.

In some embodiments the indication to execute the action may be based at least in part on at least one of: a first indication of selection of a selectable control associated with the action; or a context associated with a message of the conversation thread, wherein the context comprises the action.

In some embodiments the instructions may further cause the computing device to: determine a conversation thread identifier associated with the conversation thread; send the conversation thread identifier to the third device associated with the second application; and associate the data with the conversation thread based at least in part on the conversation thread identifier.

In some embodiments the instructions may further cause the computing device to: receive, from the third device, a presentation instruction associated with a presentation of the data, wherein the data is presented on the display based at least in part on the presentation instruction.

In some embodiments the messages may be presented sequentially from a top toward a bottom of a user interface of the first instance of the first application, and the data is presented in a position proximate the top of the user interface before the messages associated with the conversation thread.

In some embodiments the instructions may further cause the computing device to: process additional messages associated with the conversation thread between the first instance of the first application and the second instance of the first application; receive, from the third device associated with the second application, updated data associated with the second application; and cause the updated data to be presented at the first device via the first instance of the first application.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 is a schematic view of an example system usable to implement example techniques described herein.
FIGS. 2A - 2C illustrate example interfaces associated with a cross-application data sharing system, as described herein. FIG. 2A illustrates example interfaces associated with a third-party application through which the conversation thread may be initiated. FIGS. 2B and 2C illustrate an example interface associated with a messaging application configured to present contextual data associated with the third-party application of FIG. 2A.
FIGS. 3A - 3C illustrate example interfaces in which cross-application contextual data may be displayed in association with a conversation thread.
FIG. 4 illustrates another example interface in which cross-application contextual data may be displayed in association with a conversation thread.
FIG. 5 illustrates a block diagram illustrating an example system of computing devices usable to implement example techniques described herein.
FIG. 6 illustrates an example process for launching a messaging application via a third-party application and providing contextual data associated with the third-party application via the messaging application.
FIG. 7 illustrates an example process for providing contextual data associated with a third-party application via a messaging application.
FIG. 8 illustrates another example process for providing contextual data associated with a third-party application via a messaging application.
FIG. 9 illustrates yet another example process for providing contextual data associated with a third-party application via a messaging application

### DETAILED DESCRIPTION

As discussed above, many merchants offer customer service via real-time messaging. Because maintaining a messaging system may be overly burdensome for the merchant, the merchant may utilize a real-time messaging service (e.g., communication platform) to provide a means by which customers may communicate with customer service representatives. For instance, a customer may launch a merchant application to conduct business with the merchant and may decide to contact customer service regarding an issue. The customer may launch a messaging application to contact customer service, such as via a hyperlink on the merchant application or by manually launching the messaging application on a user device. However, after launch of the messaging application on the customer device, the customer may lose the context with regard to updates of the merchant application, both related and unrelated to the issue to be discussed with customer service. In some instances, the customer may be required to transition from the messaging application to the merchant application to access contextual information (e.g., relevant data) and updates with regard to the merchant application and then back again to continue a conversation thread via the messaging application. The transitions between applications can be burdensome to the customer and may cause the customer to miss time-critical information. For instance, a user may schedule a ride via a ride sharing application and while awaiting pick-up, the user may request customer service support regarding a previous ride scheduled via the ride sharing application. The user may select a link to launch a messaging application to discuss the previous ride with a customer service representative, and when doing so, may lose context with regard to the currently scheduled ride, such as an updated pick-up time, color, make and/or model of the car, and the like. To maintain awareness of updates to the currently scheduled ride, the user may have to transition back and forth between the messaging application and the ride sharing application, which may result in the user missing time-critical information related to one or both of the applications.

This application describes techniques for providing contextual data associated with a merchant application via a messaging application to provide a user (e.g., customer) context while conducting a conversation thread (e.g., messaging thread) with a merchant (e.g., third-party, customer service representative, etc.). In some examples, the contextual data may provide general information regarding a real-time status of the merchant application. For example, the user may request a chat with a rideshare application customer service. A messaging application may launch on the user device and a location of a car designated for the user may be presented to the user via the messaging application. In some examples, the contextual data may include data associated with the conversation thread. In such examples, the contextual data provided may be associated with the inquiry (e.g., topic of conversation, customer issue, etc.). For example, the user described above, utilizing the techniques described herein, may view updates with regard to the currently scheduled ride while conducting a conversation with the customer service representative regarding the previous ride. As such, the user may be able to concurrently access updated, time-critical information and address an issue with the ride sharing application customer service.

In some examples, a communication platform may receive, from a first device associated with a user via a first application, an indication of selection of a selectable control associated with a messaging function. In some examples, the communication platform may cause a second application to be presented on a display associated with the first device, the second application being associated with the messaging function. In some examples, the communication platform may receive, from a second device associated with the first application, data corresponding to the first application. In some examples, the communication platform may cause the data corresponding to the first application to be presented on the display associated with the first device via the second application.

In some examples, the communication platform may receive, from the second device, a presentation instruction associated with a presentation of the data, wherein the data is presented on the display based at least in part on the presentation instruction.

In some examples, the second application may be launched via a link associated with the selectable control and the data is received via the link.

In some examples, the communication platform may receive, from the first device, a first message in a conversation thread between the user and a representative associated with the first application, wherein the data is based at least in part on the first message.

In some examples, the data may be based at least in part on at least one of: an event associated with the first application, wherein the event occurs at a first time; or an input received via a first instance of the first application on the first device at a second time, wherein the indication of selection of the selectable control is received at a third time after at least one of the first time or the second time.

In some examples, the communication platform may determine a conversation thread identifier associated with a conversation thread between the user and a service provider associated with the first application, wherein messages associated with the conversation thread are transmitted between a first instance of the second application on the first device and a second instance of the second application on a third device associated with the first application. In some examples, the communication platform may send the conversation thread identifier to the second device associated with the first application. In some examples, the communication platform may associate the data with the conversation thread based at least in part on the conversation thread identifier.

In some examples, the communication platform may process messages associated with a conversation thread between the user and a service provider associated with the first application, wherein the messages are transmitted between a first instance of the second application on the first device and a second instance of the second application on a third device associated with the first application, wherein the messages are presented sequentially from a top toward a bottom of a user interface of the first instance of the second application, and the data is presented in a position proximate the top of the user interface before the messages associated with the conversation thread.

In some examples, the data may include first data received at a first time, and the communication platform may receive, from the second device at a second time, second data corresponding to the first application. In some examples, the communication platform may cause the second data to be presented on the display associated with the first device via the second application, wherein the second data is determined based at least in part on at least one of: a modification to a state associated with the first application, an event associated with the first application, or a context associated with a message sent via a first instance of the second application on the first device.

In some examples, the communication platform may receive, from a first device associated with a user via a first application, an indication of selection of a selectable control associated with a messaging function. In some examples, the communication platform may cause a second application to be presented on a display associated with the first device, the second application being associated with the messaging function. In some examples, the communication platform may receive, from a second device associated with the first application, data corresponding to the first application. In some examples, the communication platform may cause the data corresponding to the first application to be presented on the display associated with the first device via the second application.

In some examples, the communication platform may receive, from the second device, a presentation instruction associated with a presentation of the data, wherein the data is presented on the display based at least in part on the presentation instruction.

In some examples, the second application may be launched via a link associated with the selectable control and the data is received via the link.

In some examples, the data may be determined based at least in part on at least one of: a context associated with a first message sent via the second application on the first device, an event associated with the first application at a first time, or an input received via a first instance of the first application on the first device at a second time, wherein the indication of selection is received at a third time after the first time and the second time.

In some examples, the communication platform may determine a conversation thread identifier associated with a conversation thread between the user and a service provider associated with the first application, wherein messages associated with the conversation thread are transmitted between a first instance of the second application on the first device and a second instance of the second application on a third device associated with the first application. In some examples, the communication platform may send the conversation thread identifier to the second device associated with the first application. In some examples, the communication platform may associate the data with the conversation thread based at least in part on the conversation thread identifier.

In some examples, the communication platform may receive, from the second device at a second time, second data corresponding to the first application. In some examples, the communication platform may cause the second data to be presented on the display associated with the first device via the second application, wherein the second data is determined based at least in part on at least one of: a modification to a state associated with the first application, an event associated with the first application, or a context associated with a message sent via a first instance of the second application on the first device.

In some examples, the communication platform may receive, from a first device associated with a user via a first application, an indication to execute an action associated with a second application. In some examples, the communication platform may process messages associated with a conversation thread between the user and a service provider associated with the second application, wherein the messages are transmitted between a first instance of the first application on the first device and a second instance of the first application on a second device associated with the second application and wherein the messages are based at least in part on the action. In some examples, the communication platform may receive, from a third device associated with the second application, data corresponding to the second application. In some examples, the communication platform may cause the data corresponding to the second application to be presented on a display associated with the first device via the first instance of the first application.

In some examples, the indication to execute the action may be based at least in part on at least one of: a first indication of selection of a selectable control associated with the action, or a context associated with a message of the conversation thread, wherein the context comprises the action.

In some examples, the communication platform may determine a conversation thread identifier associated with the conversation thread. In some examples, the communication platform may send the conversation thread identifier to the third device associated with the second application. In some examples, the communication platform may associate the data with the conversation thread based at least in part on the conversation thread identifier.

In some examples, the communication platform may receive, from the third device, a presentation instruction associated with a presentation of the data, wherein the data is presented on the display based at least in part on the presentation instruction.

In some examples, the messages may be presented sequentially from a top toward a bottom of a user interface of the first instance of the first application, and the data is presented in a position proximate the top of the user interface before the messages associated with the conversation thread.

In some examples, the communication platform may process additional messages associated with the conversation thread between the first instance of the first application and the second instance of the first application. In some examples, the communication platform may receive, from the third device associated with the second application, updated data associated with the second application. In some examples, the communication platform may cause the updated data to be presented at the first device via the first instance of the first application.

The techniques described herein improve a user interface of a computing device by presenting contextual data regarding a merchant application via a messaging application through which a user may conduct a conversation thread with the merchant. The contextual data may provide a means by which a user may quickly access data associated with the merchant application without having to transition between a merchant application and the messaging application. At least because the user may have access to data without having to transition between applications to access the data in a first application and conduct a conversation thread regarding the data in a second application, the techniques described herein may improve the efficiency of the user interface of the computing device.

The techniques described herein may also improve the functioning of a computing device. Traditionally a user transitions between a merchant application and a messaging application to access information regarding the merchant and to contact a merchant customer service representative about an issue. With each transition between applications, the computing device may utilize processing power to launch the selected application. The techniques described herein include presenting data associated with the merchant application via the messaging application, removing the need to transition between the two applications, thereby making available additional processing power to the computing device and improving the functioning thereof.

Additionally, the techniques described herein improve performance of one or more computing devices by reducing an amount of content sent over a network. As discussed above, the user may transition between the merchant application (to access merchant information) and the messaging application (to discuss an issue with a customer service representative). With each transition between applications, an associated server may send large packets of updated information to be presented via the respective user interface. For instance, a user inquiring about a rideshare application may continually transition between a messaging application and a rideshare application to determine a location of the vehicle designated to deliver them to a destination. With each transition between the messaging and the rideshare applications, the respective servers may push updated information and/or other relevant information. However, utilizing the techniques described herein, the user may be provided with contextual data regarding the rideshare application while operating in the messaging application. The messaging application may receive the contextual data as a smaller data packet from the rideshare server. Thus, the techniques described herein may reduce the quantity of data sent over the network.

These and other aspects are described further below with reference to the accompanying drawings. The drawings are merely example implementations and should not be construed to limit the scope of the claims. For example, while examples are illustrated in the context of a user interface for a mobile device, the techniques may be implemented using any computing device and the user interface may be adapted to the size, shape, and configuration of the particular computing device. Also, while many of the examples are given in the context of providing customer service, the techniques described herein may also be applied to any other type of messaging with a third-party service provider or other party via a messaging application.

In particular examples, one or more objects (e.g., content or other types of objects) of a computing system may be associated with one or more privacy settings. The one or more objects may be stored on or otherwise associated with any suitable computing system or application, such as, for example, a messaging application, a social-networking system, a client system, a third-party system, a social-networking application, a photo-sharing application, or any other suitable computing system or application. Although the examples discussed herein are in the context of an online messaging application, these privacy settings may be applied to any other suitable computing system. Privacy settings (or "access settings") for an object or item of content may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the messaging application network. When privacy settings for an object allow a particular user or other entity to access that object, the object may be described as being "visible" with respect to that user or other entity. As an example, and not by way of limitation, a user of the messaging application may specify privacy settings for a user-profile page that identify a set of users that may access work-experience information on the user-profile page, thus excluding other users from accessing that information.

In particular examples, privacy settings for an object may specify a "blocked list" and/or a "restricted list" of users or other entities that should not be allowed to access certain information associated with the object. In particular examples, the blocked list may include third-party entities with whom a user does not want to communicate. The blocked list or restricted list may specify one or more users or entities for which an object is not visible. As an example, and not by way of limitation, a user may specify a set of users who may not access photo albums associated with the user, thus excluding those users from accessing the photo albums (while also possibly allowing certain users not within the specified set of users to access the photo albums). In particular examples, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example, and not by way of limitation, a particular concept node corresponding to a particular photo may have a privacy setting specifying that the photo may be accessed only by users tagged in the photo and friends of the users tagged in the photo. In particular examples, privacy settings may allow users to opt in to or opt out of having their content, information, or actions stored/logged by the social-networking system or shared with other systems (e.g., a third-party system). Although this disclosure describes using particular privacy settings in a particular manner, this disclosure contemplates using any suitable privacy settings in any suitable manner.

In particular examples, privacy settings may be based on one or more nodes or edges of a social graph. A privacy setting may be specified for one or more edges or edge-types of the social graph, or with respect to one or more nodes or node-types of the social graph. The privacy settings applied to a particular edge connecting two nodes may control whether the relationship between the two entities corresponding to the nodes is visible to other users of the messaging application network. Similarly, the privacy settings applied to a particular node may control whether the user or concept corresponding to the node is visible to other users of the messaging application network. As an example, and not by way of limitation, a first user may share an object to a communication platform associated with a messaging application. The object may be associated with a concept node connected to a user node of the first user by an edge. The first user may specify privacy settings that apply to a particular edge connecting to the concept node of the object or may specify privacy settings that apply to all edges connecting to the concept node. As another example and not by way of limitation, the first user may share a set of objects of a particular object-type (e.g., a set of images). The first user may specify privacy settings with respect to all objects associated with the first user of that particular object-type as having a particular privacy setting (e.g., specifying that all images posted by the first user are visible only to friends of the first user and/or users tagged in the images).

In particular examples, the communication platform associated with the messaging application may present a "privacy wizard" (e.g., within a webpage, a module, one or more dialog boxes, or any other suitable interface) to the first user to assist the first user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular examples, the communication platform may offer a "dashboard" functionality to the first user that may display, to the first user, current privacy settings of the first user. The dashboard functionality may be displayed to the first user at any appropriate time (e.g., following an input from the first user summoning the dashboard functionality, following the occurrence of a particular event or trigger action). The dashboard functionality may allow the first user to modify one or more of the first user's current privacy settings at any time, in any suitable manner (e.g., redirecting the first user to the privacy wizard).

Privacy settings associated with an object may specify any suitable granularity of permitted access or denial of access, including the "restrict" functionality described herein. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular examples, one or more servers may be authorization/privacy servers for enforcing privacy settings. In response to a request from a user (or other entity) for a particular object stored in a data store, the communication platform may send a request to the data store for the object. The request may identify the user associated with the request and the object may be sent only to the user (or a client system of the user) if the authorization server determines that the user is authorized to access the object based on the privacy settings associated with the object. If the requesting user is not authorized to access the object, the authorization server may prevent the requested object from being retrieved from the data store or may prevent the requested object from being sent to the user. In the search-query context, an object may be provided as a search result only if the querying user is authorized to access the object, e.g., if the privacy settings for the object allow it to be surfaced to, discovered by, or otherwise visible to the querying user. In particular examples, an object may represent content that is visible to a user through a newsfeed of the user. As an example, and not by way of limitation, one or more objects may be visible to a user's "Trending" page. In particular examples, an object may correspond to a particular user. The object may be content associated with the particular user or may be the particular user's account or information stored on the communication platform, or other computing system. As an example, and not by way of limitation, a first user may view one or more second users of an online messaging application network through a "People You May Know" function of the online messaging application network, or by viewing a list of friends of the first user. As an example, and not by way of limitation, a first user may specify that they do not wish to see objects associated with a particular second user in their newsfeed or friends list. If the privacy settings for the object do not allow it to be surfaced to, discovered by, or visible to the user, the object may be excluded from the search results. Although this disclosure describes enforcing privacy settings in a particular manner, this disclosure contemplates enforcing privacy settings in any suitable manner.

In particular examples, different objects of the same type associated with a user may have different privacy settings. Different types of objects associated with a user may have different types of privacy settings. As an example, and not by way of limitation, a first user may specify that the first user's status updates are public, but any images shared by the first user are visible only to the first user's friends on the online messaging application network. As another example and not by way of limitation, a user may specify different privacy settings for different types of entities, such as individual users, friends-of-friends, followers, user groups, or corporate entities. As another example and not by way of limitation, a first user may specify a group of users that may view videos posted by the first user, while keeping the videos from being visible to the first user's employer. In particular examples, different privacy settings may be provided for different user groups or user demographics. As an example, and not by way of limitation, a first user may specify that other users who attend the same university as the first user may view the first user's pictures, but that other users who are family members of the first user may not view those same pictures.

In particular examples, the communication platform may provide one or more default privacy settings for each object of a particular object-type. A privacy setting for an object that is set to a default may be changed by a user associated with that object. As an example, and not by way of limitation, all images posted by a first user may have a default privacy setting of being visible only to friends of the first user and, for a particular image, the first user may change the privacy setting for the image to be visible to friends and friends-of-friends.

In particular examples, privacy settings may allow a first user to specify (e.g., by opting out, by not opting in) whether the communication platform may receive, collect, log, or store particular objects or information associated with the user for any purpose. In particular examples, privacy settings may allow the first user to specify whether particular applications or processes may access, store, or use particular objects or information associated with the user. The privacy settings may allow the first user to opt in or opt out of having objects or information accessed, stored, or used by specific applications or processes. The communication platform may access such information in order to provide a particular function or service to the first user, without the communication platform having access to that information for any other purposes. Before accessing, storing, or using such objects or information, the communication platform may prompt the user to provide privacy settings specifying which applications or processes, if any, may access, store, or use the object or information prior to allowing any such action. As an example, and not by way of limitation, a first user may transmit a message to a second user via an application related to the online messaging network (e.g., a messaging app), and may specify privacy settings that such messages should not be stored by the social-networking system.

In particular examples, a user may specify whether particular types of objects or information associated with the first user may be accessed, stored, or used by the communication platform. As an example, and not by way of limitation, the first user may specify that images sent by the first user through the communication platform (a messaging application associated therewith) may not be stored by the communication platform. As another example and not by way of limitation, a first user may specify that messages sent from the first user to a particular second user may not be stored by the communication platform. As yet another example and not by way of limitation, a first user may specify that all objects sent via a particular application may be saved by the communication platform.

In particular examples, privacy settings may allow a first user to specify whether particular objects or information associated with the first user may be accessed from particular client systems or third-party systems. The privacy settings may allow the first user to opt in or opt out of having objects or information accessed from a particular device (e.g., the phone book on a user's smart phone), from a particular application (e.g., a messaging app), or from a particular system (e.g., an email server). The communication platform may provide default privacy settings with respect to each device, system, or application, and/or the first user may be prompted to specify a particular privacy setting for each context. As an example, and not by way of limitation, the first user may utilize a location-services feature of the communication platform to provide recommendations for restaurants or other places in proximity to the user. The first user's default privacy settings may specify that the communication platform may use location information provided from a client device of the first user to provide the location-based services, but that the communication platform may not store the location information of the first user or provide it to any third-party system. The first user may then update the privacy settings to allow location information to be used by a third-party image-sharing application in order to geo-tag photos.

### Privacy Settings for Mood, Emotion, or Sentiment Information

In particular examples, privacy settings may allow a user to specify whether current, past, or projected mood, emotion, or sentiment information associated with the user may be determined, and whether particular applications or processes may access, store, or use such information. The privacy settings may allow users to opt in or opt out of having mood, emotion, or sentiment information accessed, stored, or used by specific applications or processes. The communication platform may predict or determine a mood, emotion, or sentiment associated with a user based on, for example, inputs provided by the user and interactions with particular objects, such as based on messages sent by the user, and interactions with other content of the online messaging network. In particular examples, the communication platform may use a user's previous activities and calculated moods, emotions, or sentiments to determine a present mood, emotion, or sentiment. A user who wishes to enable this functionality may indicate in their privacy settings that they opt in to the communication platform receiving the inputs necessary to determine the mood, emotion, or sentiment. As an example, and not by way of limitation, the communication platform may determine that a default privacy setting is to not receive any information necessary for determining mood, emotion, or sentiment until there is an express indication from a user that the communication platform may do so. By contrast, if a user does not opt in to the communication platform receiving these inputs (or affirmatively opts out of the communication platform receiving these inputs), the communication platform may be prevented from receiving, collecting, logging, or storing these inputs or any information associated with these inputs. In particular examples, the communication platform may use the predicted mood, emotion, or sentiment to provide recommendations or advertisements to the user. In particular examples, if a user desires to make use of this function for specific purposes or applications, additional privacy settings may be specified by the user to opt in to using the mood, emotion, or sentiment information for the specific purposes or applications. As an example, and not by way of limitation, the communication platform may use the user's mood, emotion, or sentiment to provide newsfeed items, pages, friends, or advertisements to a user. The user may specify in their privacy settings that the communication platform may determine the user's mood, emotion, or sentiment. The user may then be asked to provide additional privacy settings to indicate the purposes for which the user's mood, emotion, or sentiment may be used. The user may indicate that the communication platform may use his or her mood, emotion, or sentiment to provide newsfeed content and recommend pages, but not for recommending friends or advertisements. The communication platform may then only provide newsfeed content or pages based on user mood, emotion, or sentiment, and may not use that information for any other purpose, even if not expressly prohibited by the privacy settings.

### Privacy Settings for Ephemeral Sharing

In particular examples, privacy settings may allow a user to engage in the ephemeral sharing of objects on the online messaging network. Ephemeral sharing refers to the sharing of objects (e.g., posts, photos) or information for a finite period of time. Access or denial of access to the objects or information may be specified by time or date. As an example, and not by way of limitation, a user may specify that a particular message sent by the user is visible to the user's friends for the next week, after which time the message may no longer be accessible to other users. As another example and not by way of limitation, a company may post content related to a product release ahead of the official launch and specify that the content may not be visible to other users until after the product launch.

In particular examples, for particular objects or information having privacy settings specifying that they are ephemeral, the communication platform may be restricted in its access, storage, or use of the objects or information. The communication platform may temporarily access, store, or use these particular objects or information in order to facilitate particular actions of a user associated with the objects or information, and may subsequently delete the objects or information, as specified by the respective privacy settings. As an example, and not by way of limitation, a first user may transmit a message to a second user, and the communication platform may temporarily store the message in a data store until the second user has viewed or downloaded the message, at which point the communication platform may delete the message from the data store. As another example and not by way of limitation, continuing with the prior example, the message may be stored for a specified period of time (e.g., 2 weeks), after which point the communication platform may delete the message from the data store.

### Privacy Settings for User-Authentication and Experience-Personalization Information

In particular examples, the communication platform may have functionalities that may use, as inputs, personal or biometric information of a user for user-authentication or experience-personalization purposes. A user may opt to make use of these functionalities to enhance their experience on the online messaging network. As an example, and not by way of limitation, a user may provide personal or biometric information to the social-networking system. The user's privacy settings may specify that such information may be used only for particular processes, such as authentication, and further specify that such information may not be shared with any third-party system or used for other processes or applications associated with the communication platform. As another example and not by way of limitation, the communication platform may provide a functionality for a user to provide voice-print recordings to the online messaging network. As an example, and not by way of limitation, if a user wishes to utilize this function of the online messaging network, the user may provide a voice recording of his or her own voice to provide a status update on the online messaging network. The recording of the voice-input may be compared to a voice print of the user to determine what words were spoken by the user. The user's privacy setting may specify that such voice recording may be used only for voice-input purposes (e.g., to authenticate the user, to send voice messages, to improve voice recognition in order to use voice-operated features of the online social network), and further specify that such voice recording may not be shared with any third-party system or used by other processes or applications associated with the communication platform. As another example and not by way of limitation, the communication platform may provide a functionality for a user to provide a reference image (e.g., a facial profile, a retinal scan) to the online messaging network. The online messaging network may compare the reference image against a later-received image input (e.g., to authenticate the user, to tag the user in photos). The user's privacy setting may specify that such voice recording may be used only for a limited purpose (e.g., authentication, tagging the user in photos), and further specify that such voice recording may not be shared with any third-party system or used by other processes or applications associated with the communication platform.

### User-Initiated Changes to Privacy Settings

In particular examples, changes to privacy settings may take effect retroactively, affecting the visibility of objects and content shared prior to the change. As an example, and not by way of limitation, a first user may share a first image and specify that the first image is to be public to all other users. At a later time, the first user may specify that any images shared by the first user should be made visible only to a first user group. The communication platform may determine that this privacy setting also applies to the first image and make the first image visible only to the first user group. In particular examples, the change in privacy settings may take effect only going forward. Continuing the example above, if the first user changes privacy settings and then shares a second image, the second image may be visible only to the first user group, but the first image may remain visible to all users. In particular examples, in response to a user action to change a privacy setting, the communication platform may further prompt the user to indicate whether the user wants to apply the changes to the privacy setting retroactively. In particular examples, a user change to privacy settings may be a one-off change specific to one object. In particular examples, a user change to privacy may be a global change for all objects associated with the user.

In particular examples, the communication platform may determine that a first user may want to change one or more privacy settings in response to a trigger action associated with the first user. The trigger action may be any suitable action on the online messaging network. As an example, and not by way of limitation, a trigger action may be a change in the relationship between a first and second user of the online messaging network (e.g., "un-friending" a user, changing the relationship status between the users). In particular examples, upon determining that a trigger action has occurred, the communication platform may prompt the first user to change the privacy settings regarding the visibility of objects associated with the first user. The prompt may redirect the first user to a workflow process for editing privacy settings with respect to one or more entities associated with the trigger action. The privacy settings associated with the first user may be changed only in response to an explicit input from the first user and may not be changed without the approval of the first user. As an example and not by way of limitation, the workflow process may include providing the first user with the current privacy settings with respect to the second user or to a group of users (e.g., un-tagging the first user or second user from particular objects, changing the visibility of particular objects with respect to the second user or group of users), and receiving an indication from the first user to change the privacy settings based on any of the methods described herein, or to keep the existing privacy settings.

In particular examples, a user may need to provide verification of a privacy setting before allowing the user to perform particular actions on the online messaging network, or to provide verification before changing a particular privacy setting. When performing particular actions or changing a particular privacy setting, a prompt may be presented to the user to remind the user of his or her current privacy settings and to ask the user to verify the privacy settings with respect to the particular action. Furthermore, a user may need to provide confirmation, double-confirmation, authentication, or other suitable types of verification before proceeding with the particular action, and the action may not be complete until such verification is provided. As an example, and not by way of limitation, a user's default privacy settings may indicate that a person's relationship status is visible to all users (i.e., "public"). However, if the user changes his or her relationship status, the communication platform may determine that such action may be sensitive and may prompt the user to confirm that his or her relationship status should remain public before proceeding. As another example and not by way of limitation, a user's privacy settings may specify that the user's posts are visible only to friends of the user. However, if the user changes the privacy setting for his or her posts to being public, the communication platform may prompt the user with a reminder of the user's current privacy settings of posts being visible only to friends, and a warning that this change will make all of the user's past posts visible to the public. The user may then be required to provide a second verification, input authentication credentials, or provide other types of verification before proceeding with the change in privacy settings. In particular examples, a user may need to provide verification of a privacy setting on a periodic basis. A prompt or reminder may be periodically sent to the user based either on time elapsed or a number of user actions. As an example, and not by way of limitation, the communication platform may send a reminder to the user to confirm his or her privacy settings every six months or after every ten photo posts. In particular examples, privacy settings may also allow users to control access to the objects or information on a per-request basis. As an example, and not by way of limitation, the communication platform may notify the user whenever a third-party system attempts to access information associated with the user and require the user to provide verification that access should be allowed before proceeding.

### EXAMPLE SYSTEM ARCHITECTURE

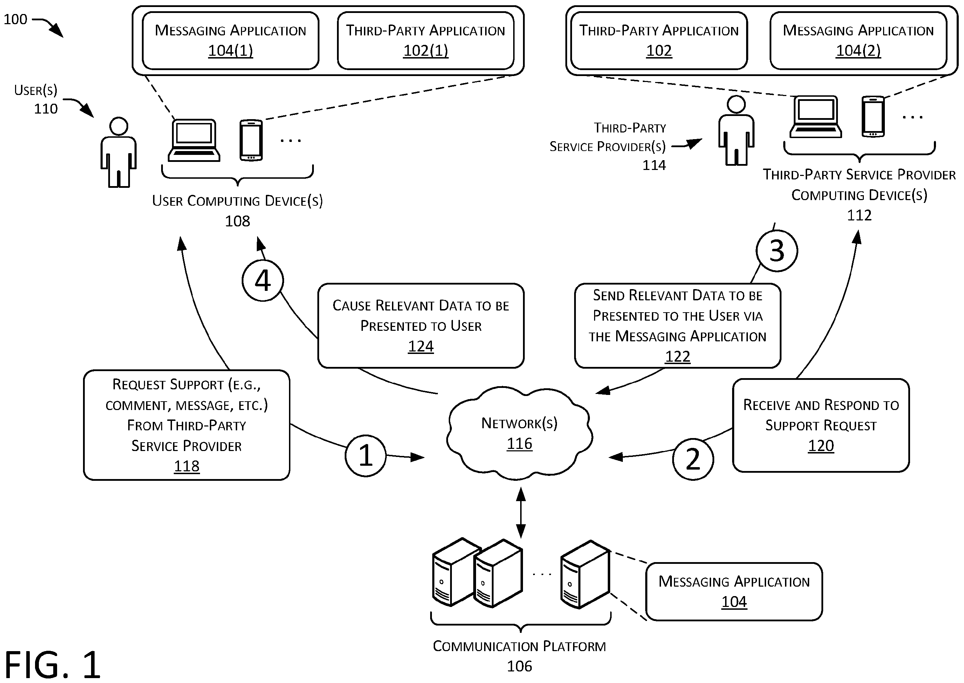

FIG. 1 is a schematic view of an example system 100 usable to implement the techniques described herein to present contextual data (e.g., relevant data) associated with a third-party application 102 (e.g., a merchant application) via a messaging application 104. In some examples, the system 100 may include a communication platform 106 configured to manage the messaging application 104, such as to provide a means of messaging between one or more user computing devices 108 (e.g., user device(s) 108) associated with one or more users 110 and one or more third-party service provider computing devices 112 (e.g., third-party device(s) 112) associated with one or more third-party service providers 114. In some examples, the communication platform 106 may be configured to provide end-to-end encrypted messaging between parties, such as the users 110 and the third-party service providers 114. In some examples, the communication platform 106 may be run on the third-party service provider computing device(s) 112 as a messaging application 104 enterprise client. In such examples, the third-party service provider computing device(s) 112 may include an application programming interface (API) that enables messaging and data sharing between the third-party service provider computing device(s) 112 and the user computing device(s) 108.

In various examples, the user device(s) 108 may include a first instance of the messaging application 104(1), and one or more of the third-party device(s) 112 may include a second instance of the messaging application 104(2), to facilitate communications between the user(s) 110 and the third-party service provider(s) 114. In some examples, the third-party device(s) 112 may be configured to manage the third-party application 102. In some examples, the user device(s) 108 may include a first instance of the third-party application 102(1). In such examples, the user(s) 110 may be able to conduct business with, access data associated with, or otherwise interact with the third-party service provider(s) 114. For example, the third-party service provider(s) 114 may be associated with a business that provides a service. The user(s) 110 may launch the first instance of the third-party application 102(1) on the user device(s) 108 to arrange an occurrence of the service.

Each of the user device(s) 108 and the third-party device(s) 112 include one or more processors and memory storing computer executable instructions to implement the functionality discussed herein attributable to the respective computing devices. In some examples, the user device(s) 108 and the third-party device(s) 112 may include desktop computers, laptop computers, tablet computers, mobile devices (e.g., smart phones or other cellular or mobile phones, mobile gaming devices, portable media devices, etc.), or other suitable computing devices. The user device(s) 108 and the third-party device(s) 112 may execute one or more client applications, such as a web browser (e.g., Microsoft Windows Internet Explorer, Mozilla Firefox, Apple Safari, Google Chrome, Opera, etc.) or a native or special-purpose client application (e.g., social media applications, messaging applications, email applications, games, etc.), to access and view content over network 116.

Network 116 may represent a network or collection of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which the user device(s) 108 and the third-party device(s) 112 may access the communication platform 106 and/or communicate with one another.

The third-party device(s) 112 may include one or more servers and/or other computing devices, any or all of which may include one or more processors and memory storing computer executable instructions to implement the functionality discussed herein attributable to the messaging system or digital platform. In at least one example, the third-party device(s) 112 include server(s) configured to manage the third-party application 102 and one or more other computing devices configured for facilitating messaging between the third-party service provider(s) 114 and the user device(s) 108 via the communication platform 106.

The communication platform 106 may include one or more servers or other computing devices, any or all of which may include one or more processors and memory storing computer executable instructions to implement the functionality discussed herein attributable to the messaging system or digital platform. In various examples, the communication platform 106 may be stored on one or more of the third-party devices 112. In some examples, the communication platform 106 may be stored on computing systems independent from the third-party device(s) 112. The communication platform 106 may enable the user(s) 110 and the third-party service provider(s) 114 to communicate with one another via the first instance of the messaging application 104(1) on the user device(s) 108 and the second instance of the messaging application 104(2) on the third-party device(s) 112. The communication platform 106 may manage the messaging application 104, including the first instance of the messaging application 104(1) and the second instance of the messaging application 104(2), to facilitate communications between the user(s) 110 and the third-party service provider(s) 114.

In various examples, the communication platform 106 may store user data associated with the user(s) 110 and the third-party service provider(s) 114, such as in a messaging account associated therewith. The user data may include a type of user (e.g., customer, merchant, etc.), identifiers associated with the user (e.g., telephone number, IP address, other identifiers etc.), previous conversation threads associated with the user(s) 110 and the third-party service provider(s) 114, and the like. In at least one example, the user data may include permissions to view metadata associated with messages in a message thread.

FIG. 1 illustrates an example in which, at operation 118 (indicated by "1"), a user 110 may request support from a third-party service provider 114 via one or more messages. The message(s) may be sent from a user device 108 via a first instance of the messaging application 104(1). In some examples, the user 110 may select a selectable control associated with a messaging function via a first instance of the third-party application 102(1) on the user device(s) 108. In such examples, the messaging function may correspond to service support (e.g., customer service) associated with the third-party service provider 114.

In some examples, responsive to receiving an indication of the selectable control, the communication platform 106 may cause the first instance of the messaging application 104(1) to launch on the user device 108. In some examples, the selectable control may include a link (e.g., deep link) to a conversation between the user 110 and the third-party service provider 114. In such examples, the first instance of the messaging application 104(1) may launch to a messaging page associated with the conversation between the user 110 and the third-party service provider 114. In some examples, the selectable control may include one or more links associated with a list of predefined reasons for contacting the third-party service provider 114. In some examples, the selectable control may include a user input, such as to provide a general topic for the service support request 118 (e.g., refund, etc.). In some examples, responsive to receiving an indication of selection of a link of the one or more links and/or an indication of user input, the first instance of the messaging application 104(1) may launch to the messaging page associated with the conversation between the user 110 and the third-party service provider 114, with an automatically generated message associated with the link corresponding to a predefined reason for contacting the third-party service provider 114. In some examples, responsive to receiving an indication of selection a link of the one or more links and/or an indication of user input, data associated with the selection (e.g., data associated with the predefined reason for contacting the third-party service provider 114 corresponding to the link) and/or data associated with the input may be sent to the third-party service provider computing device(s) 112. In some examples, the data associated with the selection and/or input may be sent to the third-party service provider computing device(s) 112 via the network 116, such as via a network request payload (e.g., POST). In such examples, the data associated with the selection and/or input may be provided to the third-party service provider computing device(s) 112 substantially concurrently or asynchronously with the third-party application 102 causing the first instance of the messaging application 104(1) to launch on the user computing device(s) 108. In some examples, responsive to the data associated with the selection and/or input, the third-party service provider computing device(s) 112 may generate and send a message to the user 110 via the messaging application 104, for viewing by the user 110 after launch of the first instance of the messaging application 104(1).

In some examples, the communication platform 106 may associate a conversation identifier with the conversation (e.g., conversation thread, messages associated with the support request, etc.). In such examples, the conversation identifier (e.g., conversation thread identifier) may include numbers, symbols, letters, and/or other indicators used to identify a particular conversation thread.

In some examples, the user 110 may submit the support request via the first instance of the messaging application 104(1), such as in a message to the third-party service provider 114. In some examples, the indication of selection of the selectable control may represent the support request. In such examples, the user 110 may compose and send messages related to the support request via the first instance of the messaging application 104(1).

In various examples, the user 110 may launch the first instance of the messaging application 104(1) on the user computing device 108 and send an indication of the support request via the first instance of the messaging application 104(1). The indication of the support request may include an input corresponding to an identifier (e.g., name, phone number, alias (e.g., customer_service@merchant, info@merchant, etc.), Internet protocol address, etc.) associated with the third-party service provider(s) 114, an input corresponding to a message addressed to the third-party service provider 114, or the like.

In some examples, responsive to the indication of the support request, the communication platform 106 may cause one or more quick reference links to various functions and/or services provided via the third-party application 102 to surface via the first instance of the messaging application 104(1). In some examples, the quick reference links may facilitate communication between the user 110 and the third-party service provider 114 and/or expedite action associated with the third-party application 102. For example, a third-party service provider 114 may include a merchant associated with a hotel reservation service. Responsive to identifying the hotel reservation service as the recipient of the service request, the communication platform 106 may cause a first quick reference link to make a reservation and a second quick reference link to modify a reservation.

In some examples, responsive to receiving an indication of selection of the quick reference link, the communication platform 106 and/or the third-party device(s) 112 may cause the third-party application 102(1) to launch on the user device 108. In some examples, a quick reference link may cause a standard message associated with the quick reference link to be sent to the third-party service provider 114. In such examples, the responsive to receiving an indication of selection of the quick reference link, the communication platform 106 may generate and send the standard message to the third-party service provider 114. The standard message may be presented on the display of the user device 108 and/or the third-party device(s) 112.

In some examples, the communication platform 106 may process the messages via the messaging application 104. In various examples, responsive to receiving a first message associated with the support request, the communication platform 106 may associate the first message with the conversation identifier in the messaging application 104. In such examples, each subsequent message sent regarding the support request (e.g., each message associated with a conversation thread) may be associated with the conversation identifier. The conversation thread may be viewable by the user 110 via the first instance of the messaging application 104(1), and/or viewable by the third-party service provider 114 via the second instance of the messaging application 104(2). In some examples, the communication platform 106 may cause a date and/or time associated with the first message of the conversation thread to be published proximate the first message (e.g., immediately above, to the right of, to the left of, etc.).

In various examples, the communication platform 106 may associate a message sent between the user 110 and the third-party service provider 114 with the conversation thread based on a determination that the message is sent from one party or the other within a threshold period of time of a preceding message (e.g., 5 minutes, 15 minutes, 1 hour, etc.). In such examples, the communication platform 106 may determine that messages are related to one another based on the threshold time between messages.

At operation 120 (indicated by "2"), the third-party service provider 114 may receive the support request (e.g., from the communication platform 106 via the second instance of the third-party application 102(2)). In some examples, the communication platform 106 may determine that the third-party service provider 114 may have permissions to view metadata associated with the message(s). In such examples, the communication platform 106 may provide a means by which the third-party service provider 114 may view the metadata, such as to view an identifier associated with the conversation thread.

Additionally, at operation 120, the third-party service provider 114 may respond to the message(s) from the user 110. The communication platform 106 may associate the response messages sent to the user 110 from the third-party service provider 114 with the conversation thread in the messaging application 104. In various examples, the third-party service provider 114 may send response messages to the user 110, such as to request information from the user 110 regarding the support request. In some examples, the third-party service provider 114 may generate the response messages to determine a context associated with the support request. The context may include a service requested of the third-party service provider 114 (e.g., previous, current, future transaction, etc.), a modification to a service requested of the third-party service provider 114, questions regarding a service provided by the third-party service provider 114, or any other reason a user would request support from the third-party service provider 114.

In some examples, based on a determination of the context associated with the support request, the third-party service provider 114, at operation 122 (indicated by "3"), may send relevant data to the communication platform 106. The relevant data may include real-time and/or near real-time data associated with the third-party application 102 and/or a third-party service. The relevant data may include relevant information associated with the third-party application 102 to enable the user 110 to quickly determine a status of the third-party application 102 and access data relevant to the conversation thread (e.g., relevant to the service request).

In some examples, the relevant data may be sent based on an input provided (e.g., order placed, reservation made, service scheduled, etc.) by the user via a first instance of the third-party application 102, such as prior to sending the service request. For example, the user 110 may order a ride via a rideshare application at a first time and may submit a service request regarding the ride at a second time. The relevant data may include data associated with the ride, such as location data associated with the user 110 (e.g., a location of the user device 108 based on a location device (e.g., GPS, etc.)) and/or a driver designated to drive the user 110 to a destination.

In various examples, the relevant data may be associated with the service request. In such examples, the third-party service provider 114 and/or third-party device(s) 112 may determine a context associated with the service request and may send relevant data based on the context. For example, the user 110 may submit a service request regarding modifying a reservation via third-party reservation service. The reservation service may receive the service request and may send relevant data associated with booked reservations associated with the user 110 (e.g., associated with a user profile).

Based on receipt of the relevant data, at operation 124 (indicated by "4"), the communication platform 106 may cause the relevant data to be presented to the user 110 at the user device 108. In various examples, the communication platform may cause the relevant data to be presented based on a presentation instruction received from the third-party device(s) 112. In such examples, the third-party device(s) 112 may generate presentation instructions (e.g., rendering schema, rendering instruction) for the data and send the presentation instructions to the user device(s) 108.

The relevant data may be presented to the user 110 via the first instance of the messaging application 104(1). In various examples, the communication platform 106 may cause the messaging application 104(1) to present the relevant data at a position proximate a message of the conversation thread. In at least one example, the communication platform 106 may cause the messaging application 104(1) to present the relevant data above the messages of the conversation thread. In various examples, the communication platform 106 may cause the messaging application 104(1) to present the relevant data based on a determination that at least one message of the conversation thread is presented on a display of the user device 108.

In various examples, the third-party service provider 114 may send updated data to the communication platform 106, such as based on an update to the third-party application 102 and/or the conversation thread. In some examples, the relevant data may include updated data associated with a time after the user 110 submitted the service request. In such examples, the updated data may include changes to data associated with the third-party application 102 that occurred after the first instance of the messaging application 104(1) launching on the user device 108. In some examples, the third-party service provider 114 may identify the updated data based on an event (e.g., arrival at pick-up, arrival at destination, reservation check-in time, etc.) that occurs associated with the third-party application 102.

In some examples, the updated data may include data that has changed since a preceding packet of relevant data was sent to the communication platform 106. In some examples, the updated data may be sent continuously (or substantially continuously). For example, a ridesharing computing device may continuously provide relevant data associated with an updated ETA to a destination. In various examples, the updated data may be sent periodically (e.g., every 30 seconds, 1 minute, 3 minutes, 5 minutes, etc.). For example, the ridesharing computing device may provide relevant data regarding the updated ETA to the destination every 1 minute. In some examples, the ridesharing computing device may send the updated data based on a determination of an event occurring and/or a modification to a state of the third-party application. For example, the rideshare application may provide relevant data regarding an updated ETA to the first instance of the messaging application 104(1) (via the communication platform 106) based on a determination that the user 110 is secured in the vehicle (e.g., event associated with pick-up occurred, the state of the third-party application changed from a pick-up to a delivery phase, etc.).

### Example User Interfaces

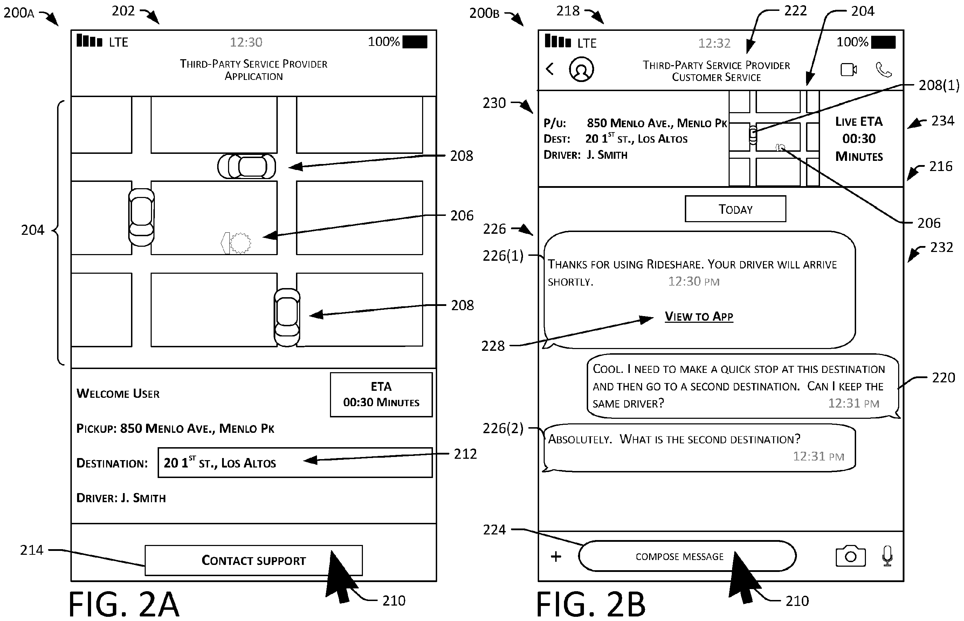

FIG. 2A - FIG. 4 are schematic views showing example user interfaces that are usable to implement the techniques described herein for providing cross-application contextual data. The interfaces may be generated by at least one of a computing device of a communication platform (e.g., communication platform 106) or, in the example of a third-party application (e.g., third-party application 102), a third-party service provider computing device (e.g., third-party device(s) 112), and transmitted to one or more user computing devices (e.g., user device(s) 108) and/or one or more third-party service provider computing devices (e.g., third-party device(s) 112) for presentation. In some examples, the interfaces may be generated by the user computing device(s) and/or the third-party service provider computing device(s) based at least in part on instructions received from the communication platform 106. As discussed above, the interfaces described in this section may, but need not, be implemented in the context of the system 100.

FIGS. 2A - 2C illustrate example interfaces in which a user may initiate a conversation thread with a third-party service provider via a third-party application, thereby launching a messaging application configured to present relevant data from the third-party application. Interface 200A shown in FIG. 2A illustrates a user interface associated with the third-party application 202 (e.g., merchant application 202). In the illustrative example, the third-party application 202 may include an application associated with a rideshare service. As such, the third-party application 202 may include a map 204 including a user location 206 and locations of vehicles 208 operating proximate the user location. In other examples, the third-party application 202 may include a different application associated with any other type of third-party service, such as a reservation application (e.g., restaurant, hotel, flight reservations, etc.), membership applications (e.g., gymnasium, loyalty rewards (e.g., airlines, coffee shops, supermarkets, etc.), shopping applications (e.g., food, goods, services, etc.), social media applications, gaming applications, or any other type of application that may have associated therewith customer service support.

In various examples, a user 210 (represented by an arrow in this example) may provide input 212 associated with an action (e.g., order of an item, a service, etc.). In the illustrative example, the user 210 may input at least a destination address associated with the rideshare service. In the illustrative example, the third-party application 202 may determine the pickup location based in part on a signal from a location device on the user device associated with the interface 200a. Additionally or alternatively, the input 212 may include the pickup location.

In some examples, the user 210 may provide the input 212 at a first time and, at a second time (after the first time), may request customer support. In the illustrative example, the user 210 may select a selectable control 214 indicating an intent to contact customer support. In various examples, the selectable control 214 may include a link to a messaging application. In some examples, the link may include a deeplink to a messaging page for a conversation thread between the user 210 and a customer service representative associated with the third-party service provider. In various examples, a communication platform may receive an indication of selection of the selectable control 214 and may cause a messaging application to launch on the user device. In some examples, the messaging application may launch to the messaging page associated with the deeplink.

Interface 200B shown in FIG. 2B illustrates a messaging page 216 associated with a messaging application 218. For instance, the messaging application 218 may display the messaging page 216 as a result of the user 210 selecting the selectable control 214. In some examples, the user 210 may be able compose outgoing messages 220 to the third-party service provider customer service 222 (e.g., third-party 222, other party 222) via the messaging page 216, such as in the "COMPOSE MESSAGE" section 224. Additionally, the messaging page 216 may include incoming messages 226 received from the third-party party 222. As illustrated in FIG. 2B, the outgoing messages 220 may be aligned on a right side of the interface 200B, while the incoming messages 226 may be aligned on a left side of the interface 200B. However, this is merely an illustrative example, an any other organization of the messages 220 and 226 is contemplated herein, such as centered justification of the messages 220 and 226, outgoing messages 220 aligned left and incoming messages 226 aligned right, and the like.

In various examples, the indication of selection of the selectable control 214 of FIG. 2A may represent a service support request as described at operation 118 of FIG. 1. In some examples, responsive to receiving the indication of selection of the selectable control 214 to launch the messaging application and/or the service support request, the third-party may send a first incoming message 226(1) via the communication platform to the user 210. In the illustrative example, the first incoming message 226(1) may be associated with the input 212 or action of the user 210, such as an order or request for service submitted by the user 210 via the third-party application 202. In such an example, the first incoming message 226(1) may be determined based on a context of the user input 212 and/or actions via the third-party application 202. In other examples, the first incoming message 226(1) may represent a greeting or other welcoming message directed to the user 210.

In some examples, the first incoming message 226(1) may include a quick reference link 228. In the illustrative example, the quick reference link 228 may include a link back to the third-party application 202. In some examples, the link may include a deeplink back to the interface 200A, to enable the user 210 to easily transition back to where the user 210 left off in the merchant application 202. Although illustrated in FIG. 2B as being received prior to the user sending an outgoing message 220, in other examples, the first incoming message 226(1) may be received responsive to (and after) an outgoing message 220 from the user 210.

In various examples, the user 210 may compose the outgoing message 220 via the interface 200b. The communication platform may process the outgoing message 220, causing it to be transmitted to the third-party, such as via a second instance of the merchant application 104(2) as described in relation to FIG. 1. In some examples, the outgoing message may include a service support request. In such examples, the third-party may receive the outgoing message and may determine a context associated with the service support request based on the contents of the outgoing message 220.

In some examples, the third-party may send relevant data 230 to the communication platform for presentation to the user 210 via the messaging page 216. In various examples, a server computing device associated with the third-party may determine and send the relevant data 230 to the communication platform. In some examples, the server computing device may associate a conversation identifier (e.g., conversation thread identifier) with the conversation thread 232 associated with the messaging page 216. In some examples, the communication platform may generate the conversation identifier and provide the conversation identifier to the server computing device, such as to enable a group conversation between the server computing device (providing relevant data 230), the user 210 via the first instance of the messaging application, and a third-party customer service representative via a second instance of the messaging application.

In some examples, the conversation identifier may include a means by which the relevant data 230 may be provided to enrich the conversation thread 232 between the user 210 and the third-party, such as by presenting contextual data to the user 210. The relevant data 230 may include real-time and/or near real-time data associated with the third-party application 202 and/or a third-party service. The relevant data 230 may include relevant information associated with the third-party application 202 to enable the user 210 to quickly determine a status of the third-party application 202 and access data relevant to the service support request (e.g., a conversation thread 232 associated with outgoing messages 220 and incoming messages 226) and/or other relevant data associated with the third-party application.

In some examples, the relevant data 230 may be determined based on the context associated with the support request. The context may be based on the content of the outgoing message 220 and/or an event on the third-party application that led to selection of the selectable control 214. For example, the user 210 may submit a service request regarding a change to a final destination. Based on determining the context of the service request as a change to the final destination, the third-party may include the original (or first) destination and the final (second) destination in relevant data 230.

In some examples, the merchant application 202 (server computing device associated therewith) may send the relevant data 230 may be sent based on the input 212 by or action of the user 210, such as prior to sending the service request and/or selecting the selectable control 214. For example, as illustrated in FIGS. 2A and 2B, the user 210 may order a ride via a rideshare application by submitting the input 212 at a first time. At a second time, the user 210 may submit a service request by selecting the selectable control 214. In such an example, the relevant data 230 presented to the user via the messaging page 216 may include data associated with the requested ride, such as the map 204 including the user location 206 and a location of the vehicle 208(1) designated for the ride, and/or a driver designated to drive the user 210 to the destination. Additionally, in the illustrative example, the relevant data 230 includes a live estimated time of arrival (ETA) 234 at the destination.

In various examples, the communication platform may receive the relevant data from the third-party (via a third-party computing device) and may cause the relevant data 230 to be presented on the messaging page 216. In the illustrative example, the communication platform may cause the relevant data 230 to be presented at a top of the messaging page 216 associated with the messaging application. Additionally or alternatively, the communication platform may cause the relevant data 230 to be presented at a bottom, side, middle, or other location of the messaging page 216.

In some examples, the messaging application may be configured to be viewed in a portrait mode (e.g., a vertical configuration), such as that depicted in FIG. 2B. Additionally or alternatively, the messaging application may be configured to be viewed in a landscape mode (e.g., a horizontal configuration). In some examples, the communication platform may be configured to cause the relevant data 230 to be presented based on the configuration (e.g., portrait or landscape). For example, the relevant data 230 may be presented at a top of the messaging page 216 in the portrait mode and at a right side of the messaging page 216 in a landscape mode. In some examples, the communication platform may cause the relevant data 230 to be presented at a location regardless of the configuration (e.g., at a bottom of the messaging page 216 in both the portrait and landscape modes).

In various examples, the communication platform may cause the relevant data 230 to be presented based on presentation instructions (e.g., a rendering schema, locations associated with the data, colors, fonts, etc.). In some examples, the communication platform may receive the presentation instructions from a third-party computing device (e.g., third party server computing device). In some examples, the third-party computing device may send the presentation instructions concurrently or substantially concurrently with the relevant data 230. In some examples, the third-party computing device may send the presentation instructions in advance of the relevant data. In such examples, the communication platform may store the presentation instructions on a datastore based on the third-party and/or third-party application. In some examples, the communication platform may receive the relevant data 230 and may access the presentation instructions to determine how to render the relevant data 230 on the messaging page 216. In various examples, the communication platform may receive an indication of a particular presentation instruction or set of presentation instructions to use for presentation of the relevant data 230. In such examples, the communication platform may access the presentation instructions in the datastore and may select the particular presentation instruction for rendering the relevant data 230.

The relevant data 230 may provide contextual information regarding the third-party application 202 during the conversation thread 232 between the user 210 and the third-party customer service representative. In the illustrative example, the user 210 submits a service support request via the outgoing message 220 to stop at the first destination (e.g., original input destination) and continue to a second destination. The third-party customer service representative may respond to the outgoing message 220 with a second incoming message 226(1). As illustrated, the second incoming message 226(2) may request additional information from the user 210. In some examples, the second incoming message 226(2) may include a response to the service support request.

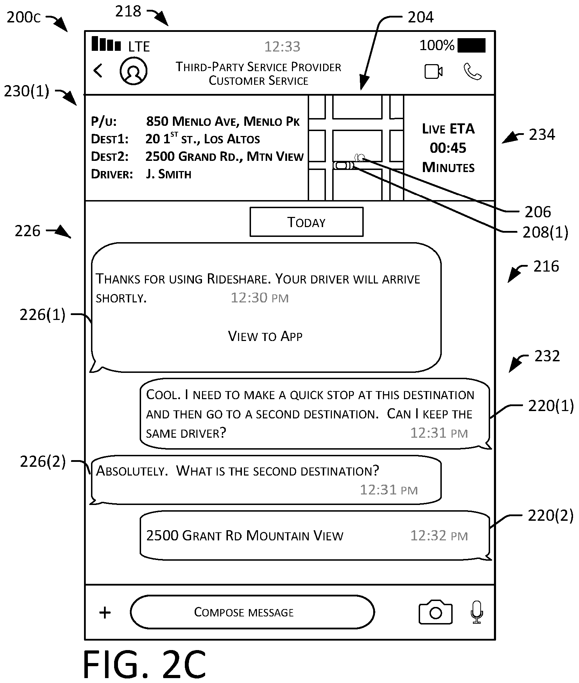

Interface 200C shown in FIG. 2C illustrates updated relevant data 230(1) presented on the messaging page 216. In some examples, the updated relevant data 230(1) may include data that changed since a preceding packet of relevant data 230 was sent to the communication platform. In some examples, some or all of the updated relevant data 230(1) may include the relevant data 230 previously sent to the communication platform.

In various examples, the third-party server computing device may continuously and/or periodically (e.g., every 45 seconds, every 2 minutes, etc.) send updated relevant data 230(1) to the communication platform for presentation via the messaging page 216. In some examples, the third-party server computing device may send the updated relevant data 230(1) based on an occurrence of an event and/or modification to a state associated with the third-party application 202. For example, the modification to the state may include a change from a pick-up phase to a delivery phase associated with the ridesharing application. For another example, an event may include a change to a traffic pattern associated with a planned route, such as an accident on the planned route that may impact the live ETA 234.

In various examples, the third-party server computing device may determine the updated relevant data 230(1) based on the service support request submitted and/or the contents of the outgoing messages 220(1) and 220(2) associated with the conversation thread 232. In the illustrative example, the updated relevant data 230(1) includes the first destination and the second destination, as provided by the user 210 via the input 212 and via the conversation thread 232. In FIG. 2C, the updated relevant data 230 also includes an updated live ETA 234 reflecting the addition of the second destination to the ride.

Additionally, the updated relevant data 230(1) may include any other data relevant to the user 210 to provide context associated with the third-party application 202 and/or a service requested therethrough. For example, the relevant data 230(1) depicted in FIG. 2C includes the map 204 with a current user location 206 and a current location of the vehicle 208(1) designated for the ride. The map 204 may provide the user 210 with a real-time location of the vehicle 208(1) and/or user location 206 so the user 210 does not lose the context of the ridesharing service (e.g., doesn't miss or delay connecting with the driver) while conducting the conversation thread 232 with the third-party customer service representative.

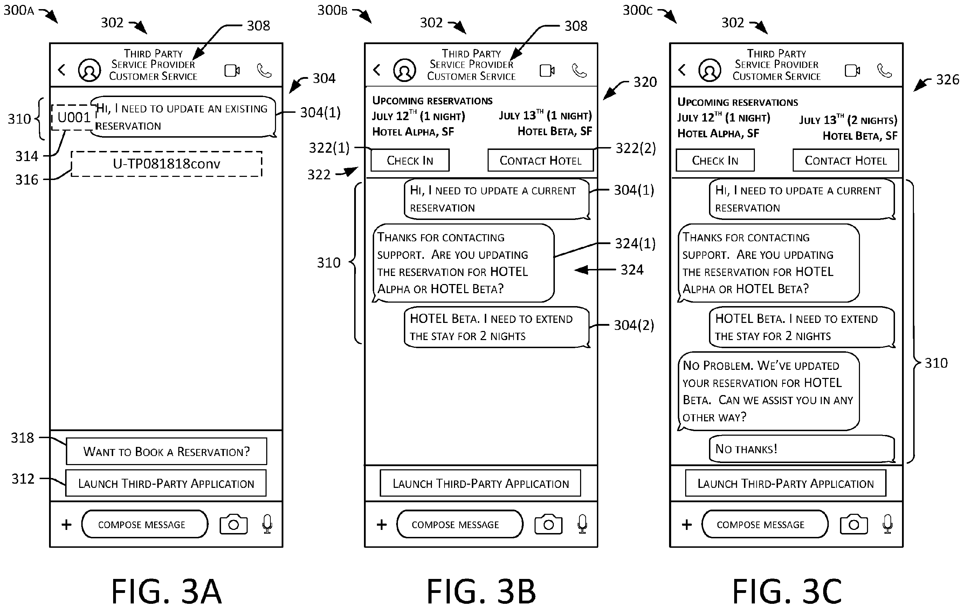

FIGS. 3A - 3C illustrate an example interface through which a service support request may be submitted via a messaging application configured to present relevant data associated with a third-party corresponding to the service support request. Interface 300A shown in FIG. 3A illustrates a messaging page 302, such as messaging page 216, associated with a messaging application. In some examples, a user may be able compose a first outgoing message 304(1) to another party 308 (e.g., third-party service provider customer service representative) via the messaging page 302. In some examples, the first outgoing message 304(1) may be associated with a service support request.

In various examples, the first outgoing message 304(1) may initiate a conversation thread 310 between the user and the other party 308. In the illustrative example, the other party 308 may include a customer service representative associated with a third-party service provider and the conversation thread 310 may be associated with an issue the user has with an existing reservation scheduled with the third-party service provider. Though this is merely an example, any type of person and/or entity capable of conducting a messaging conversation is contemplated herein. For example, the other party 308 may include a computing system configured to receive messages, perform natural language processing on the messages, and determine a context associated therewith. In such examples, the computing system may be configured, such as utilizing machine learning techniques, to generate responses to outgoing messages 304 sent by the user.

In various examples, responsive to receiving an indication that the user intends to conduct the conversation thread 310 with the other party 308, such as based on an input of an identifier (e.g., name, phone number, Internet protocol address, other alias (e.g., customer_service@third-party.com), etc.) associated with the other party as the recipient of the first outgoing message 304(1), a communication platform may surface a selectable control 312 to launch an application associated with the other party. In some examples, the selectable control 312 may include a link to the application associated with the other party. In some examples, the selectable control 312 may include a deeplink to a specific location in the application, such as based on previous user actions via the application (e.g., previously viewed page, previous order, etc.).

In various examples, the communication platform may process the first outgoing message 304(1). The processing may include assigning a message identifier 314 (e.g., number, symbol, letter, etc.) to the message and/or a conversation identifier 316 (e.g., conversation thread identifier) to the conversation thread 310. In various examples, the message identifier 314 and/or the conversation identifier 316 may be determined based on the parties associated with the conversation thread 310 (e.g., user and other party 308), a date/time associated with a message and/or conversation thread, a chronological order of messages (e.g., numbered sequentially) and/or conversation threads 310 between the parties, or the like.

In some examples, the processing may include providing the first outgoing message 304(1), the message identifier 314, and/or the conversation identifier 316 to the other party 308. In some examples, a server computing device associated with the other party 308 may be configured to determine a context associated with the first outgoing message 304(1) and/or the conversation thread 310 (e.g., such as if additional outgoing messages 304 are necessary to ascertain the context). In some examples, the server computing device may determine the context utilizing natural language processing and/or machine learning techniques. For example, the computing device may process the words associated with the first outgoing message 304(1) to determine that a context associated therewith is an existing reservation. In some examples, the server computing device may receive the context from another computing device associated with the other party 308. For example, a customer service representative associated with the other party 308 operating the other device may send the server computing device an indication of the context.

Additionally, the messaging page 302 may include one or more second selectable controls 318 configured to indicate a context of the conversation thread 310. In some examples, the second selectable control(s) 318 may include labels for topics that are often inquired about. In various examples, the server computing device and/or another computing device associated with the other party 308 may provide the topics and/or the labels for the topics to be presented on the messaging page 302. In some examples, the second selectable control(s) 318 may be presented based on presentation instructions provided by the server computing device and/or the other computing device associated with the other party 308. Responsive to receiving an indication of selection of a second selectable control 318, the server computing device may determine the context of the conversation thread 310, such as without first receiving the first outgoing message 304(1). For example, responsive to receiving an indication of selection of the second selectable control 318 labeled "WANT TO BOOK A RESERVATION?", the server computing device may determine that the user intends to schedule a new reservation. In some examples, the second selectable control 318 may include a quick reference link configured to cause data associated with a particular function and/or service provided by the other party 308 to surface via the messaging page 302.

Based on the context associated with the first outgoing message 304(1) and/or the conversation thread 310, the server computing device may identify data associated with a second (third-party) application that is relevant to the conversation thread 310. Interface 300B shown in FIG. 3B illustrates a messaging page 302 with relevant data 320 associated with the third-party application. In various examples, the server computing device may determine the relevant data 320 based on the context associated with the conversation thread 310. In some examples, the server computing device may determine the relevant data 320 based on an indication of selection of the second selectable control 318. The relevant data 320 may include real-time and/or near real-time data associated with the application associated with the other party 308 and/or a service provided by the other party 308. The relevant data 320 may include relevant information associated with the other party 308 (application and/or service) to enable the user to quickly determine a status of the application and/or service associated with the other party and access data relevant to the conversation thread 310 (e.g., relevant to the service request).

In various examples, based on a determination that the context is not associated with the second selectable control 318, the server computing device may send an instruction to the communication platform to remove the second selectable control 318 from the messaging page 302. In such examples, the server computing device may ensure that only data relevant to the user is presented and/or that the messaging page 302 is not unnecessarily cluttered.

In some examples, the server computing device may access a user account associated with the user to determine the relevant data 320. In such examples, the user account may include previous actions the user conducted with the other party 308 (e.g., purchase/transaction/order history, current checkout state (e.g., ecommerce cart, etc.), reservations, itineraries, etc.). For example, the server computing device may access a user account associated with the user to determine that the user has two upcoming reservations, one for hotel alpha and one for hotel beta. The server computing device may determine that the reservation information is relevant data 320 and may send the reservation information to the communication platform for presentation via the messaging page.

In various examples, the server computing device associated with the other party 308 may determine that one or more quick reference links 322 should be presented to the user with the relevant data 320. The quick reference links 322 may include selectable controls including links to various functions and/or services provided via an application associated with the other party. For example, as illustrated, a first quick reference link 322(1) includes a means by which the user may expedite a check-in process with a current reservation and a second quick reference link 322(2) includes a means by which the user may contact the hotel directly. In various examples, the quick reference links 322, such as the second quick reference link 322(2), may include a link to another messaging page 302 associated with the messaging application. In such an example, the user may be able to conduct a conversation thread with a representative of a hotel with minimal effort.

In various examples, the communication platform may receive the relevant data 320 and/or data associated with the quick reference link(s) 322 from the server computing device and may cause the relevant data 320 and/or the data associated with the quick reference link(s) 322 to be presented based on presentation instructions (e.g., a rendering schema, locations associated with the data, colors, fonts, etc.). In some examples, the communication platform may receive the presentation instructions from the server computing device. In some examples, the presentation instructions may be sent concurrently or substantially concurrently with the relevant data 320 and/or the data associated with the quick reference link(s) 322. In some examples, the presentation instructions may be sent in advance of the relevant data 320 and/or data associated with the quick reference link(s) 322. In such examples, the communication platform may store the presentation instructions on a datastore based on the other party 308 and/or application associated therewith. In some examples, the communication platform may receive the relevant data 320 and/or the data associated with the quick reference link(s) 322, and may access the presentation instructions to determine how to render the relevant data 320 and/or the data associated with the quick reference link(s) 322 on the messaging page 302. In various examples, the communication platform may receive an indication of a particular presentation instruction or set of presentation instructions to use for presentation of the relevant data 320 and/or the data associated with the quick reference link(s) 322. In such examples, the communication platform may access the presentation instructions in the datastore and may select the particular presentation instruction for rendering the relevant data 320 and/or the data associated with the quick reference link(s) 322.

In various examples, the communication platform may process the outgoing messages 304 from the user to the other party 308 and incoming messages 324, such as first incoming message 324(1), from the other party 308 to the user. The user and the other party may communicate back and forth via messages 304 and 324 to determine a resolution to the service support request (e.g., resolution to the user issue). In various examples, the server computing device may determine an updated context associated with the conversation thread 310 at a second time. In some examples, based on the updated context, the server computing device may send updates to the relevant data 320 and/or the data associated with the quick reference links 322 to the communication platform for presentation via the messaging page 302.

Interface 300C shown in FIG. 3C illustrates the messaging page 302 with updated relevant data 326 associated with the third-party application based on the conversation thread 310. In various examples, the server computing device may determine the updated relevant data 326 based on the service support request submitted and/or the contents of the outgoing messages 304 and the incoming messages 324 associated with the conversation thread 310. In various examples, the updated relevant data 326 may be determined based on an updated context and/or resolution associated with the conversation thread 310. In such examples, the server computing device may send updated relevant data 326 to the communication platform for presentation via the messaging page. For example, the updated relevant data 326 may include the upcoming reservations with the updated reservation for Hotel Beta for 2 nights, the updated reservation comprising the updated context and/or resolution associated with the conversation thread 310.

In various examples, the updated relevant data 326 may be determined based on an event occurrence and/or modification to a state of the third-party application and/or service provided by the other party 308. In the illustrative example, the event and/or modification to the state of the third-party application may include a reservation update. However, this is not meant to be limiting, and the event and/or modification to the state of the third-party application may include any other events and/or changes associated with the application, such as a modified ETA, change to an order state (e.g., processing, delivery, etc.), change from a pick-up state to a delivery state (e.g., for a rideshare application), or any other event and/or modification to a state of an application.

In some examples, the updated relevant data 326 may include data that changed since the relevant data 320 (e.g., a preceding packet of relevant data 320) was sent to the communication platform 106. In some examples, the updated relevant data 326 may be sent continuously (or substantially continuously) from the server computing device to the communication platform. For example, a ridesharing computing device may continuously provide updated relevant data 326 associated with an updated ETA to a destination. In various examples, the updated relevant data 326 may be sent periodically (e.g., every 30 seconds, 1 minute, 3 minutes, 5 minutes, etc.). For example, the ridesharing computing device may provide updated relevant data 326 regarding the updated ETA to the destination every 1 minute.

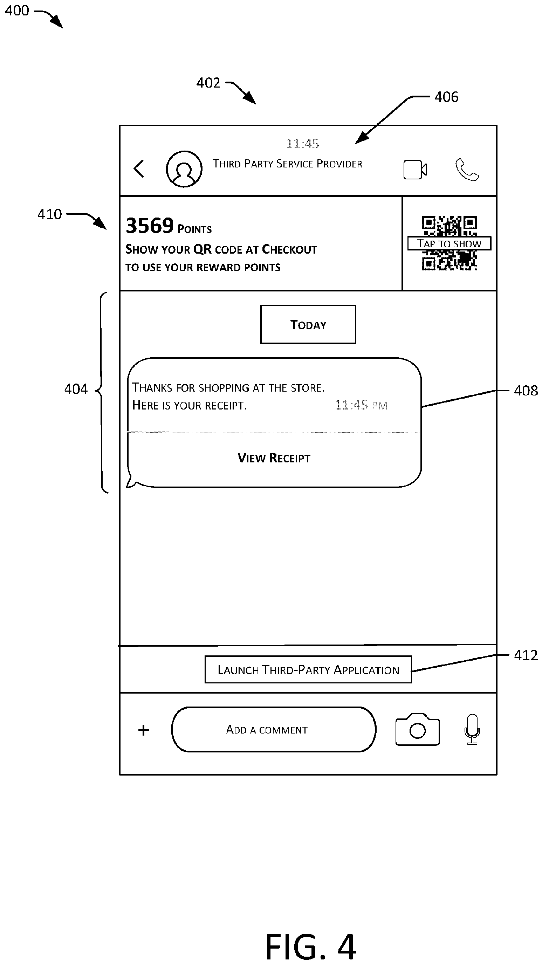

FIG. 4 illustrates an example interface in which cross-application contextual data may be displayed in association with a messaging application. Interface 400 shown in FIG. 4 illustrates a messaging page 402 associated with a messaging application on a user device, the messaging page 402 including a conversation thread 404 between a user corresponding to the user device and a third-party service provider 406 (e.g., other party 406). In the illustrative example, the other party 406 may include a merchant associated with a store (e.g., brick and mortar, ecommerce, etc.). In other examples, the other party 406 may include a merchant associated with a gymnasium, a museum, an aquarium, a coffee stand, and/or any other type of merchant with whom the user may maintain a user account and/or may conduct transactions.

In various examples, the other party 406 may send one or more messages 408 to the user via the messaging application. In some examples, the messaging application may be associated with a short messaging system (SMS) platform. In at least one example, the messaging application may be associated with an end-to-end encrypted communication platform.

In various examples, a server computing device associated with the other party 406 may receive an indication of activity (e.g., action) of the user with respect to the merchant. In the illustrative example, the indication of activity may include a completed transaction. In such an example, the server computing device may generate a receipt for the transaction and may send the receipt to a communication platform for presentation to the user via the messaging page 402. In some examples, the indication of activity may be received from another computing device associated with the other party 406. For example, a point-of-sale (POS) computing device associated with the other party 406 may send the server computing device the indication of activity (e.g., transaction data associated with the transaction). Based on the transaction data, the server computing device may generate and send the receipt via the communication platform.

In some examples, the communication platform may assign a conversation identifier (e.g., conversation thread identifier) to the conversation thread 404 between the user and the other party 406. In some examples, the communication platform may provide the conversation identifier to the server computing device. In some examples, the communication platform may receive the message 408 from the other party 406 and intended for the user and may associate the message 408 with the conversation identifier.

In various examples, the server computing device may identify relevant data 410 associated with the message 408 and/or the conversation thread 404. In some examples, the relevant data 410 may be determined based on current and/or previous activity of the user with respect to the merchant (e.g., reward (loyalty) point summary, gift eligibility based on loyalty points, etc.), data associated with the transaction (e.g., product return deadlines, return instructions, or the like), data associated with the merchant (e.g., hours of operation, contact information, etc.), and/or other relevant activity associated with the merchant and/or the user. In some examples, the relevant data 410 may include data specified by a merchant to be provided to a user in association with a conversation thread 404 and/or other communication between the other party 406 and the user. In the example depicted in FIG. 4, the relevant data 410 may include reward point data and a quick reference code for use at checkout with a merchant, such as to receive a discount or a free item. Though this is merely for illustrative purposes, and is not meant to be limiting.

In some examples, the relevant data 410 may include one or more quick reference links corresponding to services provided by or information regarding the other party 406. The quick reference link may be configured to facilitate communication and/or action between the user and the other party 406. The communication platform may receive an indication of selection of the quick reference link and may send the indication to the server computing device and/or other device associated with the other party 406 for processing. For example, relevant data 410 may include a quick reference link to redeem reward points for a gift. Responsive to receipt of an indication of selection of the quick reference link via the communication platform, the server computing device may process the request to redeem reward points.

The server computing device may send the relevant data 410 to the communication platform for presentation via the messaging application. Based on receipt of the relevant data 410, the communication platform may cause the relevant data 410 to be presented on the messaging page. In various examples, the relevant data 410 may be presented according to presentation instructions (e.g., rendering schema). The presentation instructions may include a location on the messaging page for the relevant data 410, fonts, colors, and other data corresponding to the presentation of the relevant data 410 on the messaging page 402. In some examples, the presentation instructions may be independent of an orientation (e.g., horizontal orientation, vertical orientation) of the first device. In such examples, the data may be presented in a same manner, regardless of the orientation of the first device. In various examples, the presentation instructions may include a first instruction for presentation in a vertical mode (e.g., portrait mode) and a second instruction for presentation in a horizontal mode (e.g., landscape mode). In such examples, responsive to an indication of rotation of the user device from the vertical mode to the horizontal mode, or vice versa, the communication platform may cause the relevant data 410 to be presented according to the relevant presentation instructions.

In various examples, the server computing device may send an instruction to the communication platform to present a selectable control 412 configured to enable a quick way for the user to launch an application associated with the other party 406. In such examples, the communication platform may cause the selectable control 412 to surface on the messaging page 402. In some examples, the selectable control 412 may include a link to the application associated with the other party 406. In some examples, the selectable control 412 may include a deeplink to a specific location in the application, such as based on previous user actions via the application (e.g., previously viewed page, previous order, etc.).

As illustrated in FIG. 4, the communication platform may cause relevant data 410 to surface on the messaging page 402, for quick reference to data associated with the other party 406 (e.g., third-party, merchant, etc.). In various examples, the communication platform may cause additional controls (e.g., selectable controls) to surface to facilitate communication between the user and the other party 406. As such, the techniques described herein may improve the functioning of the user device by reducing a number of applications running on the user device to access an equivalent amount of data (e.g., over traditional techniques that require the user to switch between two or more applications to access the data and communicate with the other party 406). Additionally, at least because the server computing device identifies data relevant to the user for transmission to the communication platform, the techniques described herein may reduce a total amount of data transmitted over a network.

### Example Computing Architecture

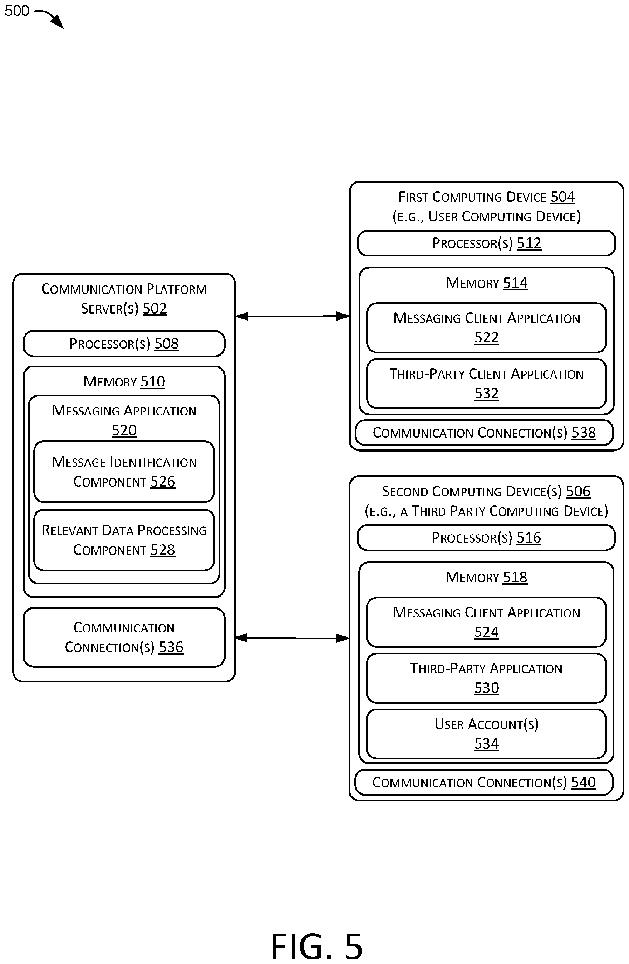

FIG. 5 illustrates a block diagram illustrating an example system 500 of computing devices usable to implement example techniques described herein. For example, FIG. 5 illustrates example computing devices including communication platform server(s) 502, a first computing device 504, and a second computing device 506, that interact over a network, such as network 116 in FIG. 1. By way of example and not limitation, the communication platform server(s) 502 may be representative of servers used to implement the system 100, the first computing device(s) 504 may be representative of the user computing device(s) 108 associated with the user(s) 110, and the second computing device(s) 506 may be representative of the third-party service provider computing device(s) 112 associated with the third-party service provider(s) 114. Though illustrated as separate devices, the communication platform server(s) 502 may be located on the second computing device(s) 506.

The communication platform server(s) 502 may comprise one or more individual servers or other computing devices that may be physically located in a single central location or may be distributed at multiple different locations. The communication platform server(s) 502 may be hosted privately by an entity administering all or part of the communications network (e.g., a utility company, a governmental body, distributor, a retailer, manufacturer, etc.), or may be hosted in a cloud environment, or a combination of privately hosted and cloud hosted services.

Each of the computing devices described herein may include one or more processors and/or memory. Specifically, in the illustrated example, communication platform server(s) 502 include one or more processors 508 and memory 510, first computing device 504 includes one or more processors 512 and memory 514, and second computing device 506 includes one or more processors 516 and memory 518. By way of example and not limitation, the processor(s) may comprise one or more Central Processing Units (CPUs), Graphics Processing Units (GPUs), or any other device or portion of a device that processes electronic data to transform that electronic data into other electronic data that may be stored in registers and/or memory. In some examples, integrated circuits (e.g., ASICs, etc.), gate arrays (e.g., FPGAs, etc.), and other hardware devices may also be considered processors in so far as they are configured to implement encoded instructions.

The memory may comprise one or more non-transitory computer-readable media and may store an operating system and one or more software applications, instructions, programs, and/or data to implement the methods described herein and the functions attributed to the various systems. In various implementations, the memory may be implemented using any suitable memory technology, such as static random-access memory (SRAM), synchronous dynamic RAM (SDRAM), nonvolatile/Flash-type memory, or any other type of memory capable of storing information. The architectures, systems, and individual elements described herein may include many other logical, programmatic, and physical components, of which those shown in the accompanying figures are merely examples that are related to the discussion herein.

As shown in FIG. 5, communication platform server(s) 502 include a messaging application 520, first computing device 504 includes messaging client application 522, and second computing device 506 includes messaging client application 524 that enables interaction of content among the computing devices via the communication platform server(s) 502. For example, content (e.g., messages including text, images, audio, video, etc.) can be shared among users associated with messaging accounts of an online messaging network provided by the communication platform system and may include sharing content in accordance with an account of a user that is restricted. In some examples, the messaging client application 524 of the second computing device 506 may include an enterprise client that enables interaction of content among one or more second computing devices 506 and the first computing device 504. In some examples, the messaging client application enables interfaces to access content, to view content, and to generate content as those described with reference to FIGS. 2A-4 for example. In particular examples, communication platform server(s) 502 send instructions to present, transmit, and receive content as discussed with reference to FIG. 2A-FIG. 4.

FIG. 5 further illustrates communication platform server(s) 502 as including message identification component 526, and relevant data processing component 528 to enable content such as messages, photos, and the like, to be shared among the computing devices. In various examples, the message identification component 526 may be configured to generate message identifiers for messages (and/or a conversation thread associated therewith) transmitted via the messaging application 520, such as from messaging client application 522 to messaging client application 524, or vice versa.

In various examples, the relevant data processing component 528 may be configured to receive relevant data, such as via a messaging client application 524 associated with a second computing device 506 (associated with a third-party service provider). The relevant data processing component 528 may process the relevant data and cause the relevant data to be presented via the messaging client application 522 (associated with the user) in association with a conversation thread, as described herein.

In various examples, the second device 506 may include a third-party application 530, such as third-party application 102. In such examples, the second device 506 may manage the third-party application 530, such as to provide a means of transmitting data related to third-party services between a third-party service provider and one or more users associated with the first device(s) 504. In some examples, the first device(s) 504 may include a third-party client application 532 that enables the user(s) to access the data associated with the third-party application.

In some examples, the second device 506 may include one or more user accounts 534. The user account(s) 534 may store data associated with individual users, such as those associated with the first computing device(s) 504. The data may include transaction/order/purchase/reservation history, a current transaction, a reward program balance, upcoming reservations, one or more locations (e.g., home location, work location, etc.), demographic information, and the like.

As shown in FIG. 5, communication platform server(s) 502 include communications connection(s) 536, first computing device 504 includes communications connection(s) 538, and second computing device 506 includes communications connection(s) 540 that enables communication between the communication platform server(s) 502, the first computing device 504, and the second computing device 506.

The communication connection(s) 536, 538, and/or 540 can include physical and/or logical interfaces for connecting communication platform server(s) 502, first computing device 504, and/or second computing device 506 to another computing device or a network, such as network(s) 116. For example, the communications connection(s) 536, 538, and/or 540 can enable Wi-Fi-based communication such as via frequencies defined by the IEEE 802.11 standards, short range wireless frequencies such as Bluetooth®, cellular communication (e.g., 2G, 2G, 4G, 4G LTE, 5G, etc.) or any suitable wired or wireless communications protocol that enables the respective computing device to interface with the other computing device(s).

While FIG. 5 is provided as an example system 500 that can be used to implement techniques described herein, the techniques described and claimed are not limited to being performed by the system 500, nor is the system 500 limited to performing the techniques described herein.

### Example Methods

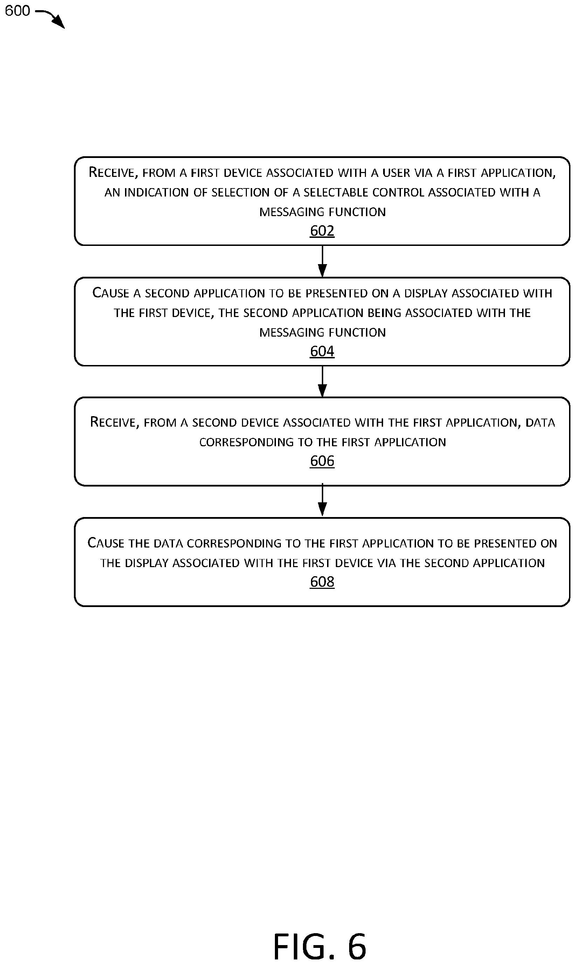

FIGS. 6-8 illustrate example processes in accordance with embodiments of the disclosure. These processes are illustrated as logical flow graphs, each operation of which represents a sequence of operations that may be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations may be combined in any order and/or in parallel to implement the processes.

FIG. 6 illustrates a flowchart illustrating an example process 600 for launching a messaging application via a third-party application and providing contextual data associated with the third-party application via the messaging application, as described herein. In some instances, some or all of process 600 may be performed by one or more components in the systems 100 or 500. By way of example and not limitation, the communication platform computing device referred to in process 600 may be representative of a computing device associated with the computing platform 106 or communication platform server(s) 502, the user device referred to in process 600 may be representative of the user computing device(s) 108 and/or first computing device 504 and the service provider computing device referred to in process 600 may be representative of the third-party service provider computing device(s) 112 and/or the second computing device(s) 506. However, the process 600 is not limited to being performed by the system 100 or 500.

At operation 602, the process 600 may include receiving, from first device associated with a user via a first application, an indication of selection of a selectable control associated with a messaging function. In various examples, the selectable control may include a link to a messaging application. In some examples, the link may include a deeplink to a messaging page for a conversation thread between the user and a customer service representative associated with the third-party service provider.

At operation 604, the process 600 may include causing a second application to be presented on a display associated with the first device, the second application being associated with the messaging function. In various examples, responsive to the indication of the selection of the selectable control, the communication platform computing device cause the second (messaging) application to launch on the user device. In some examples, the second (messaging) application may launch to the messaging page associated with the deeplink.

At operation 606, the process 600 may include receiving, from a second device associated with the first application, data corresponding to the first application. The data may include relevant data, such as relevant data 230 of FIGS. 2B and 2C, 320 of FIGS. 3B and 3C, and 410 of FIG. 4. As discussed above, the data may include data that is relevant to a service support request from the user, data corresponding to recent activity (e.g., action) by the user in the first application, application data specified by a third-party service provider associated with the first application. In some examples, a third-party service provider may determine the data to be sent to the communication platform, such as from a server computing device associated with the first application.

At operation 608, the process 600 may include causing the data corresponding to the first application to be presented on the display associated with the first device via the second application. In various examples, the communication platform may cause the data to be presented on the display based on presentation instructions (e.g., rendering schema). The presentation instructions may include a location on the messaging page for the relevant data, fonts, colors, and other data corresponding to the presentation of the data via the second application. In some examples, the presentation instructions may be independent of an orientation (e.g., horizontal orientation, vertical orientation) of the first device. In such examples, the data may be presented in a same manner, regardless of the orientation of the first device. In various examples, the presentation instructions may include a first instruction for presentation in a vertical orientation (e.g., portrait mode) and a second instruction for presentation in a horizontal orientation (e.g., landscape mode). In such examples, responsive to an indication of rotation of the user device from the vertical mode to the horizontal mode, or vice versa, the communication platform may cause the relevant data 410 to be presented according to the relevant presentation instructions.

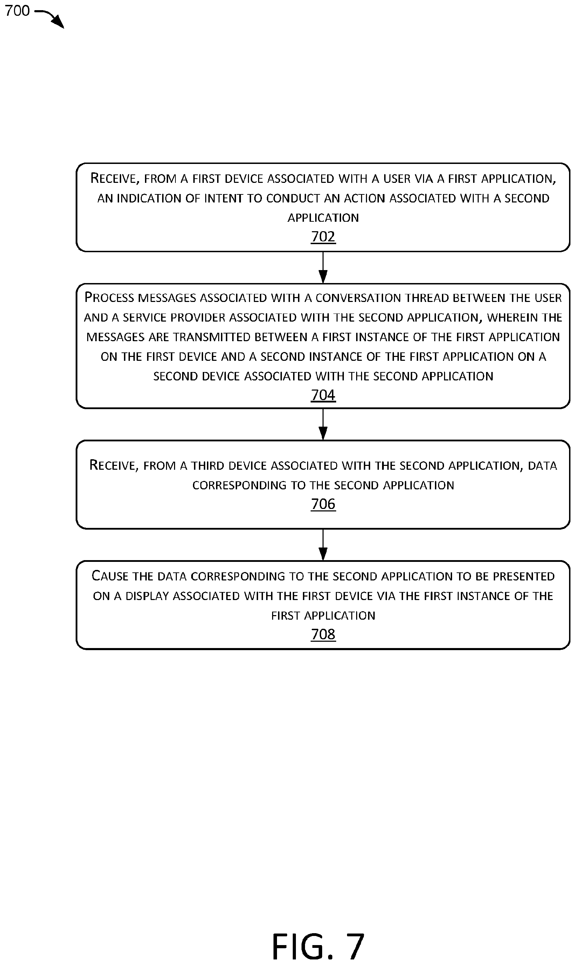

FIG. 7 illustrates a flowchart of an example process 700 for providing contextual data associated with a third-party application via a messaging application, utilizing the techniques described herein. In some instances, some or all of process 700 may be performed by one or more components in the systems 100 or 500. By way of example and not limitation, the communication platform computing device referred to in process 700 may be representative of a computing device associated with the computing platform 106 or communication platform server(s) 502, the user device referred to in process 700 may be representative of the user computing device(s) 108 and/or first computing device 504 and the service provider computing device referred to in process 700 may be representative of the third-party service provider computing device(s) 112 and/or the second computing device(s) 506. However, the process 700 is not limited to being performed by the system 100 or 500.

At operation 702, the process 700 may include receiving, from a first device associated with a user via a first application, an indication of intent to conduct an action associated with a second application. In various examples, the indication of intent to conduct the action may be transmitted via a message in a first (messaging) application. In some examples, the indication of intent to conduct the action may include an indication of selection of a selectable control associated with the action and/or the second application presented via the first application.

At operation 704, the process 700 may include processing messages associa7ted with a conversation thread between the user and a service provider associated with the second application, wherein the messages are transmitted between a first instance of the first application on the first device and a second instance of the first application on a second device associated with the second application. The messages may be processed by a communication platform computing device.

In various examples, the user may generate and send messages via the first instance of the first application, such as outgoing messages 220 and 304 of FIGS. 2B and 2C and 3A-3C. In some examples, the service provider (e.g., a customer service representative of a merchant, a computing system configured for providing customer service support, etc.) may generate and send messages, such as incoming messages 226 of FIGS. 2B and 2C and 324 of FIGS. 3B and 3C via the second instance of the first application. In some examples, the communication platform computing device may process the messages by associating the messages transmitted between the user and the service provider in a conversation thread. The communication platform may determine that the messages are associated with a conversation thread based on the messages being sent within a threshold time (e.g., 45 seconds, 3 minutes, 9 minutes, 2 hours, etc.) of one another.

In some examples, the processing may include transmitting the messages to the intended party (e.g., from the user to the service provider and vice versa). In some examples, the processing may include causing the messages to be presented via the first instance of the messaging application and/or the second instance of the messaging application in chronological order (e.g., sequentially), such as based on a time in which each of the messages are sent.

In various examples, the processing may include assigning a conversation identifier, such as conversation identifier 316 of FIG. 3A, to the conversation thread. As discussed above, the identifier may include numbers, letters, and/or symbols and/or any other indicator of a particular conversation thread.

In various examples, the processing may include transmitting a conversation identifier and/or other metadata (date, time, etc.) associated with the messages to the intended recipient (e.g., user or service provider). In at least one example, the communication platform computing device may provide the conversation identifier to the service provider. In some examples, a determination as to whether to include the conversation identifier and/or other metadata may be based on a user account associated with the intended recipient. For example, based on a determination that a user account associated with the service provider includes a business account (and/or customer service account), the communication platform computing device may determine to transmit the conversation identifier and/or the other metadata.

At operation 706, the process 700 may include receiving, from a third device associated with the second application, data corresponding to the second application. In some examples, the third device may include a server computing device associated with the second application. The data may include relevant data, such as relevant data 230 of FIGS. 2B and 2C, 320 of FIGS. 3B and 3C, and 410 of FIG. 4. As discussed above, the data may include data that is relevant to a service support request from the user, data corresponding to recent activity (e.g., action) by the user in the first application, application data specified by a third-party service provider associated with the first application. In some examples, a third-party service provider may determine the data to be sent to the communication platform, such as from a server computing device associated with the first application.

At operation 708, the process 700 may include causing the data corresponding to the second application to be presented on a display associated with the first device via the first instance of the first application. In various examples, the communication platform may cause the data to be presented on the display based on presentation instructions (e.g., rendering schema). The presentation instructions may include a location on the messaging page for the relevant data, fonts, colors, and other data corresponding to the presentation of the data via the second application. In some examples, the presentation instructions may be independent of an orientation (e.g., horizontal orientation, vertical orientation) of the first device. In such examples, the data may be presented in a same manner, regardless of the orientation of the first device. In various examples, the presentation instructions may include a first instruction for presentation in a vertical orientation (e.g., portrait mode) and a second instruction for presentation in a horizontal orientation (e.g., landscape mode). In such examples, responsive to an indication of rotation of the user device from the vertical mode to the horizontal mode, or vice versa, the communication platform may cause the relevant data to be presented according to the relevant presentation instructions.

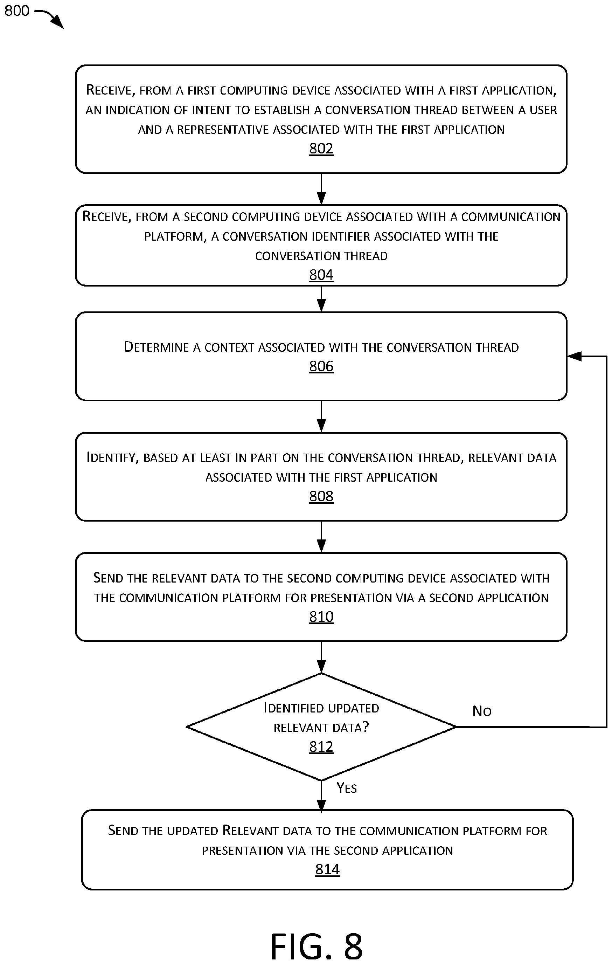

FIG. 8 illustrates an example process for providing relevant data associated with a conversation thread. In some instances, some or all of process 800 may be performed by one or more components in the systems 100 or 500. By way of example and not limitation, the communication platform computing device referred to in process 800 may be representative of a computing device associated with the computing platform 106 or communication platform server(s) 502, the user device referred to in process 800 may be representative of the user computing device(s) 108 and/or first computing device 504 and the service provider computing device referred to in process 800 may be representative of the third-party service provider computing device(s) 112 and/or the second computing device(s) 506. However, the process 800 is not limited to being performed by the system 100 or 500. In at least one example, the process 800 may be performed by one or more second computing device(s) 506 and/or third-party service provider computing device(s) 112 operating as a server computing device.

At operation 802, the process 800 may include receiving, from a first computing device associated with a first application, an indication of intent to establish a conversation thread between a user and a representative associated with the first application. In some examples, the indication of intent may include an indication of selection of a selectable control associated with a messaging function and/or associated with a messaging application. In various examples, the selectable control may include a link to a messaging application. In some examples, the link may include a deeplink to a messaging page for a conversation thread between the user and a customer service representative associated with the third-party service provider.

At operation 804, the process 800 may include receiving, from a second computing device associated with a communication platform, a conversation identifier associated with the conversation thread, such as conversation thread 232 of FIGS. 2B and 2C and 310 of FIG. 3A. In some examples, the conversation identifier may include numbers, symbols, letters, and/or other indicators used to identify a particular conversation thread.

At operation 806, the process 800 may determining a context associated with the conversation thread. The context may include a service requested of a third-party service provider (e.g., previous, current, future transaction, etc.), a modification to a service requested of the third-party service provider, questions regarding a service provided by the third-party service provider, or any other reason a user would request support from the third-party service provider. In various examples, the third-party service provider may determine the context based on the indication of intent to establish the conversation thread, such as an action or activity preceding prior to receiving the indication, a label associated with a selectable control associated with the indication of intent, or the like.

At operation 808, the process 800 may include identifying, based at least in part on the conversation thread, relevant data associated with the first application. In some examples, the server computing device associated with the first application may identify the relevant data. The relevant data may include real-time and/or near real-time data associated with the first application, such as relevant data 230 of FIGS. 2B and2C, 320 of FIGS. 3B and 3C, and 410 of FIG. 4. As discussed above, the relevant data may include data that is relevant to a service support request from the user, data corresponding to recent activity (e.g., action) by the user in the first application, application data specified by a third-party service provider associated with the first application, or the like.

At operation 810, the process 800 may include sending the relevant data to the second computing device associated with the communication platform for presentation via a second application. In various examples, the server computing device may send the relevant data as a packet of data to the computing device associated with the communication platform. In some examples, the server computing device may additionally send presentation instructions to the communication platform. The presentation instructions may include a location on the messaging page for the relevant data, fonts, colors, and other data corresponding to the presentation of the data via the second application. In some examples, the presentation instructions may be independent of an orientation (e.g., horizontal orientation, vertical orientation) of the first device. In such examples, the data may be presented in a same manner, regardless of the orientation of the first device. In various examples, the presentation instructions may include a first instruction for presentation in a vertical orientation (e.g., portrait mode) and a second instruction for presentation in a horizontal orientation (e.g., landscape mode). In such examples, responsive to an indication of rotation of the user device from the vertical mode to the horizontal mode, or vice versa, the communication platform may cause the relevant data to be presented according to the relevant presentation instructions.

At operation 812, the process 800 may include determining whether updated relevant data is identified. In various examples, the server computing device may identify updated relevant data based on an occurrence of an event and/or a modification to a state associated with the first application. In some examples, the server computing device may identify the updated data based in part on a context associated with a service support request and/or a context associated with one or more messages of the conversation thread between the user and the representative associated with the first application. In various examples, the server computing device may be configured to identify updated relevant data periodically (e.g., every 20 seconds, 1.5 minutes, etc.), continuously, and/or based on a triggering event (e.g., pre-determined event identified as triggering updated relevant data).

Based on a determination that the updated relevant data is identified ("Yes" at operation 812), the process 800 may include, at operation 814, sending the updated relevant data to the computing device associated with the communication platform for presentation via the second application. In various examples, the server computing device may send updated presentation instructions associated with the presentation of the updated relevant data. In such examples, the communication platform may cause the updated relevant data to be presented based on the updated presentation instructions.

Based on a determination that the updated relevant data is not identified ("No" at operation 812), the process 800 may include, determining an updated context associated with the conversation thread, such as that described with regard to operation 806. The server computing device may determine the updated context based on additional messages transmitted between the user and the representative associated with the first application after a first time (e.g., first time associated with a first context determination).

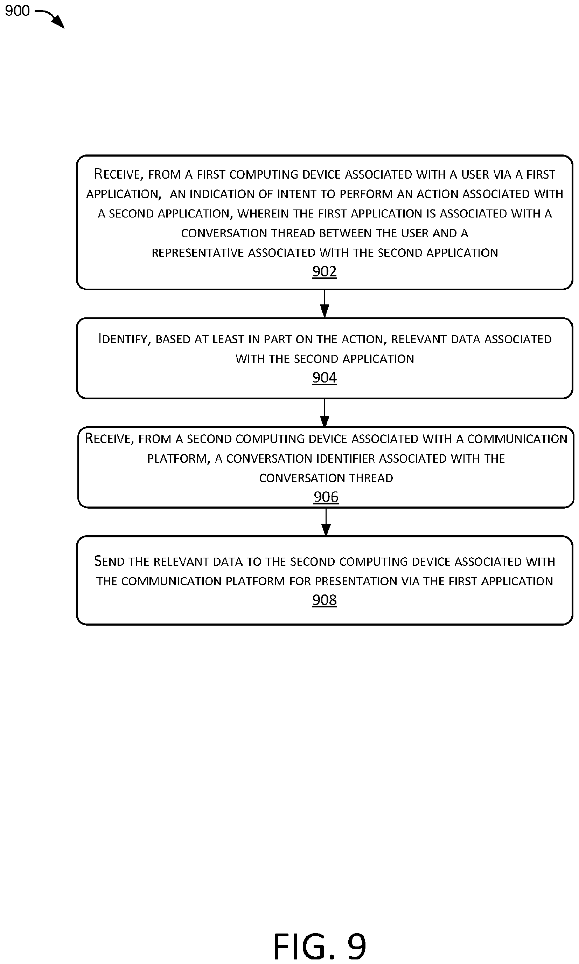

FIG. 9 illustrates another example process 900 for providing relevant data associated with a conversation thread. In some instances, some or all of process 900 may be performed by one or more components in the systems 100 or 500. By way of example and not limitation, the communication platform computing device referred to in process 900 may be representative of a computing device associated with the computing platform 106 or communication platform server(s) 502, the user device referred to in process 900 may be representative of the user computing device(s) 108 and/or first computing device 504 and the service provider computing device referred to in process 900 may be representative of the third-party service provider computing device(s) 112 and/or the second computing device(s) 506. However, the process 900 is not limited to being performed by the system 100 or 500. In at least one example, the process 900 may be performed by one or more second computing device(s) 506 and/or third-party service provider computing device(s) 112 operating as a server computing device.

At operation 902, the process 900 may include receiving, from a first computing device associated with a first application, an indication of intent to perform an action associated with a second application, wherein the first application is associated with a conversation thread between the user and a representative associated with the second application. The action may include conducting a transaction, making a reservation, modifying a reservation, returning a previously purchased item, redeeming a coupon or other reward, or any other business action conducted between a customer (user) and a merchant (third party).

At operation 904, the process 900 may include identifying, based at least in part on the action, relevant data associated with the second application. In various examples, the relevant data may include merchant-specified data that is relevant to the action. In such examples, the server computing device may access a datastore associated with relevant data corresponding to actions and may identify the relevant data. In some examples, the server computing device may determine the relevant data based in part on a service support request received via the first application and/or the conversation thread between the user and the representative.

At operation 906, the process 900 may include receiving, from a second computing device associated with the communication platform, a conversation identifier associated with the conversation thread, such as conversation thread232 of FIGS. 2B and 2C and 310 of FIG. 3A. In some examples, the conversation identifier may include numbers, symbols, letters, and/or other indicators used to identify a particular conversation thread.

At operation 908, the process 900 may include sending relevant data to the second computing device associated with the communication platform for presentation via the first application. In various examples, the server computing device may send the relevant data as a packet of data to the computing device associated with the communication platform. In some examples, the server computing device may additionally send presentation instructions to the communication platform. The presentation instructions may include a location on the messaging page for the relevant data, fonts, colors, and other data corresponding to the presentation of the data via the second application. In some examples, the presentation instructions may be independent of an orientation (e.g., horizontal orientation, vertical orientation) of the first device. In such examples, the data may be presented in a same manner, regardless of the orientation of the first device. In various examples, the presentation instructions may include a first instruction for presentation in a vertical orientation (e.g., portrait mode) and a second instruction for presentation in a horizontal orientation (e.g., landscape mode). In such examples, responsive to an indication of rotation of the user device from the vertical mode to the horizontal mode, or vice versa, the communication platform may cause the relevant data to be presented according to the relevant presentation instructions.

As stated above, the order in which the operations are described is not intended to be construed as a limitation, and any number of the described operations may be combined in any order and/or in parallel to implement the processes. In some embodiments, one or more operations of the above-described methods may be omitted entirely. By way of example and not limitation, operations 602 and 604 may be performed without operations 606 and 608 and/or operations 802-810 may be performed without operations 812. Moreover, the methods described herein can be combined in whole or in part with each other or with other methods.

The various techniques described herein may be implemented in the context of computer-executable instructions or software, such as program modules, that are stored in computer-readable storage and executed by the processor(s) of one or more computing devices such as those illustrated in the figures. Generally, program modules include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, not limited to the forms of memory that are specifically described.

### Conclusion

Although the discussion above sets forth example implementations of the described techniques, other architectures may be used to implement the described functionality, and are intended to be within the scope of this disclosure. Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method comprising:
receiving, from a first device associated with a user via a first application, an indication of selection of a selectable control associated with a messaging function;
causing a second application to be presented on a display associated with the first device, the second application being associated with the messaging function;
receiving, from a second device associated with the first application, data corresponding to the first application; and
causing the data corresponding to the first application to be presented on the display associated with the first device via the second application.

2. The method of claim 1, further comprising:
receiving, from the second device, a presentation instruction associated with a presentation of the data,
wherein the data is presented on the display based at least in part on the presentation instruction.

3. The method of claim 1 or 2, wherein the second application is launched via a link associated with the selectable control and the data is received via the link.

4. The method of any one of the preceding claims, further comprising:
receiving, from the first device, a first message in a conversation thread between the user and a representative associated with the first application,
wherein the data is based at least in part on the first message.

5. The method of any one of the preceding claims, wherein the data is based at least in part on at least one of:
a context associated with a first message sent via the second application on the first device;
an event associated with the first application, wherein the event occurs at a first time; or
an input received via a first instance of the first application on the first device at a second time,
wherein the indication of selection of the selectable control is received at a third time after at least one of the first time or the second time.

6. The method of any one of the preceding claims, further comprising:
determining a conversation thread identifier associated with a conversation thread between the user and a service provider associated with the first application, wherein messages associated with the conversation thread are transmitted between a first instance of the second application on the first device and a second instance of the second application on a third device associated with the first application;
sending the conversation thread identifier to the second device associated with the first application; and
associating the data with the conversation thread based at least in part on the conversation thread identifier.

7. The method of any one of the preceding claims, further comprising processing messages associated with a conversation thread between the user and a service provider associated with the first application, wherein the messages are transmitted between a first instance of the second application on the first device and a second instance of the second application on a third device associated with the first application,
wherein the messages are presented sequentially from a top toward a bottom of a user interface of the first instance of the second application, and the data is presented in a position proximate the top of the user interface before the messages associated with the conversation thread.

8. The method of any one of the preceding claims, wherein the data is first data received at a first time, the method further comprising:
receiving, from the second device at a second time, second data corresponding to the first application; and
causing the second data to be presented on the display associated with the first device via the second application,
wherein the second data is determined based at least in part on at least one of:
a modification to a state associated with the first application;
an event associated with the first application; or
a context associated with a message sent via a first instance of the second application on the first device.

9. A computing system comprising:
one or more processors; and
computer readable media storing instructions that, when executed by the one or more processors, cause the computing system to implement a method according to any one of claims 1 to 8.

10. One or more computer readable media storing instructions that, when executed by one or more processors of a computing device, cause the computing device to:
receive, from a first device associated with a user via a first application, an indication to execute an action associated with a second application;
process messages associated with a conversation thread between the user and a service provider associated with the second application, wherein the messages are transmitted between a first instance of the first application on the first device and a second instance of the first application on a second device associated with the second application and wherein the messages are based at least in part on the action;
receive, from a third device associated with the second application, data corresponding to the second application; and
cause the data corresponding to the second application to be presented on a display associated with the first device via the first instance of the first application.

11. The one or more computer readable media of claim 10, wherein the indication to execute the action is based at least in part on at least one of:
a first indication of selection of a selectable control associated with the action; or
a context associated with a message of the conversation thread, wherein the context comprises the action.

12. The one or more computer readable media of claim 10 or 11, the instructions further causing the computing device to:
determine a conversation thread identifier associated with the conversation thread;
send the conversation thread identifier to the third device associated with the second application; and
associate the data with the conversation thread based at least in part on the conversation thread identifier.

13. The one or more computer readable media of any one of claims 10 to 12, the instructions further causing the computing device to:
receive, from the third device, a presentation instruction associated with a presentation of the data,
wherein the data is presented on the display based at least in part on the presentation instruction.

14. The one or more computer readable media of any one of claims 10 to 13, wherein the messages are presented sequentially from a top toward a bottom of a user interface of the first instance of the first application, and the data is presented in a position proximate the top of the user interface before the messages associated with the conversation thread.

15. The one or more computer readable media of any one of claims 10 to 14, the instructions further causing the computing device to:
process additional messages associated with the conversation thread between the first instance of the first application and the second instance of the first application;
receive, from the third device associated with the second application, updated data associated with the second application; and
cause the updated data to be presented at the first device via the first instance of the first application.
